(19) Europäisches Patentamt
European Patent Office
Office européen des brevets

(11) **EP 3 989 015 B1**

(12) **EUROPEAN PATENT SPECIFICATION**

(45) Date of publication and mention
of the grant of the patent:
**30.10.2024 Bulletin 2024/44**

(21) Application number: **20862295.1**

(22) Date of filing: **03.09.2020**

(51) International Patent Classification (IPC):
**G05B 17/02** *(2006.01)*     **B62D 15/02** *(2006.01)*
**B60W 30/09** *(2012.01)*

(52) Cooperative Patent Classification (CPC):
**B60W 30/18163; B60W 30/09; B60W 30/0956;
B62D 15/0255;** B60W 2554/4042; B60W 2554/802

(86) International application number:
**PCT/CN2020/113135**

(87) International publication number:
**WO 2021/047438 (18.03.2021 Gazette 2021/11)**

(54) **METHOD, APPARATUS AND DEVICE FOR CONSTRUCTING SIMULATED VEHICLE LANE CHANGE TRAJECTORY, AND STORAGE MEDIUM**

VERFAHREN, GERÄT UND VORRICHTUNG ZUM AUFBAUEN EINER SIMULIERTEN FAHRSPURWECHSELTRAJEKTORIE UND SPEICHERMEDIUM

PROCÉDÉ, APPAREIL ET DISPOSITIF DE CONSTRUCTION DE TRAJECTOIRE DE CHANGEMENT SIMULÉ DE VOIE DE VÉHICULE ET SUPPORT DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.09.2019 CN 201910857583**

(43) Date of publication of application:
**27.04.2022 Bulletin 2022/17**

(73) Proprietor: **Tencent Technology (Shenzhen)
Company Limited
Shenzhen, Guangdong, 518057 (CN)**

(72) Inventor: **DU, Haining
Shenzhen, Guangdong 518057 (CN)**

(74) Representative: **Eisenführ Speiser
Patentanwälte Rechtsanwälte PartGmbB
Postfach 10 60 78
28060 Bremen (DE)**

(56) References cited:
EP-A1- 1 898 232          CN-A- 104 282 033
CN-A- 104 282 033        CN-A- 104 960 524
CN-A- 109 035 863        CN-A- 109 948 801
CN-A- 110 780 602        DE-A1- 102013 021 813
US-A1- 2015 251 656      US-A1- 2018 354 519

## Description

This application claims priority to Chinese Patent Application No. 201910857583.2, titled "METHOD, APPARATUS AND DEVICE FOR CONSTRUCTING SIMULATED VEHICLE LANE CHANGE TRAJECTORY" filed on September 9, 2019.

FIELD

The present invention relates to the technical field of Internet communication, and in particular to a method, an apparatus and a device for constructing a simulated vehicle lane change trajectory.

BACKGROUND

In development of automated driving systems, a process from simulation to real vehicle testing is always required, and a simulation experiment based on an automated driving simulation system, as a zero-risk, fast iteration, and reproducible test method, lays a solid foundation for automated driving.

At present, in a vehicle lane change scenario of an automated driving simulation system, only trajectory planning of a vehicle traveling from a point in its own lane to another point in a neighboring lane within a specified time is considered; in other words, a behavior of a vehicle changing from an original lane to a target lane is simulated. However, in the real world, when traffic is relatively heavy or drivers are fractious, a vehicle lane change process cannot be completed at one time due to interference of some factors. For example, a vehicle that is in a neighboring target lane and is behind the present vehicle may accelerate, resulting in that the present vehicle in the current lane cannot complete a lane change safely.

According to US 2018/354519 A1, when lane change assist control for assisting a lane change from an own lane (original lane) to an adjacent target lane is performed, the determination as to whether or not another vehicle is in the target lane may be made based on the own lane width, the own vehicle's deviation from the lateral center of the own lane (own lane deviation), and the lateral position of the another vehicle. When the vehicle enters the target lane, own lane switching in which the own lane deviation changes by the lane width occurs and makes it impossible to properly perform the above determination. In view of this, after occurrence of own lane switching, the above determination is made based on a value obtained by adding the own lane width to the another vehicle lateral position or a value obtained by subtracting the own lane width from the another vehicle lateral position.

CN 104282033 A discloses an integrated lane changing behavior simulation method oriented towards vehicle animation simulation. The method includes the coordinate system building step, wherein a lane changing track of a vehicle to change a lane is built on the basis of a moving coordinate system, the current position of the vehicle to change the lane serves as the origin of the moving coordinate system, the transverse axis of the moving coordinate system is in the lane line direction of the vehicle to change the lane, and the longitudinal axis of the moving coordinate system is in the direction perpendicular to the transverse axis; the lane changing track describing step, wherein the offsets of the lane changing track in the transverse axis and the longitudinal axis are described respectively on the basis of the moving coordinate system; the track restraint step, wherein a restraint condition is formed on the basis of influence on the lane changing track from multiple influence factors; the track obtaining step, wherein the lane changing track is restrained on the basis of the constraint condition, and the final lane changing track of the vehicle is obtained.

SUMMARY

According to embodiments of the present invention, a method for constructing a simulated vehicle lane change trajectory is provided. The method is executed by a target lane change vehicle. The method includes:

constructing a lane change trajectory coordinate system by using a position of the target lane change vehicle as an origin, using a center line of a current lane of the target lane change vehicle as an ordinate axis, and using a normal of the center line as an abscissa axis;
determining a target preceding vehicle according to the position of the target lane change vehicle;
determining target longitudinal traveling data of the target lane change vehicle in a lane change process according to a longitudinal speed of the target lane change vehicle, a longitudinal speed of the target preceding vehicle, and a distance between the target preceding vehicle and the target lane change vehicle at each time instant in the lane change process;
determining target transverse traveling data of the target lane change vehicle in the lane change process according to preset initial transverse traveling data, preset end transverse traveling data, and preset lane change time in the lane change process;

constructing, in a case that a preset lane change condition is met, or in a case that the preset lane change condition is not met and it is determined to continue to change lanes, a first lane change trajectory of the target lane change vehicle in the lane change trajectory coordinate system based on the target transverse traveling data and the target longitudinal traveling data if a following vehicle in a target lane decelerates;

updating, in a case that the preset lane change condition is not met and it is determined to continue to change lanes, an acceleration in the target longitudinal traveling data if the following vehicle does not decelerate, to cause an updated longitudinal speed of the target lane change vehicle to be greater than a longitudinal speed of the following vehicle and less than a longitudinal speed of a preceding vehicle in the target lane; and constructing a second lane change trajectory of the target lane change vehicle in the lane change trajectory coordinate system based on the updated longitudinal traveling data and the target transverse traveling data; and

updating, in a case that the preset lane change condition is not met and it is determined not to continue to change lanes, transverse traveling data and longitudinal traveling data in an original lane return process, and constructing a first original lane return trajectory of the target lane change vehicle in the lane change trajectory coordinate system according to the transverse traveling data and the longitudinal traveling data in the original lane return process.

According to embodiments of the present invention, an apparatus for constructing a simulated vehicle lane change trajectory is further provided. The apparatus includes:

a lane change trajectory coordinate system construction module, configured to construct a lane change trajectory coordinate system by using a position of a target lane change vehicle as an origin, using a center line of a current lane of the target lane change vehicle as an ordinate axis, and using a normal of the center line as an abscissa axis;

a target preceding vehicle determining module, configured to determine a target preceding vehicle according to the position of the target lane change vehicle;

a target longitudinal traveling data determining module, configured to determine target longitudinal traveling data of the target lane change vehicle in a lane change process according to a longitudinal speed of the target lane change vehicle, a longitudinal speed of the target preceding vehicle, and a distance between the target preceding vehicle and the target lane change vehicle at each time instant in the lane change process;

a target transverse traveling data determining module, configured to determine target transverse traveling data of the target lane change vehicle in the lane change process according to preset initial transverse traveling data, preset end transverse traveling data, and preset lane change time in the lane change process;

a first lane change trajectory construction module, configured to construct, in a case that a preset lane change condition is met, or in a case that the preset lane change condition is not met and it is determined to continue to change lanes, a first lane change trajectory of the target lane change vehicle in the lane change trajectory coordinate system based on the target transverse traveling data and the target longitudinal traveling data if a following vehicle in a target lane decelerates;

a second lane change trajectory construction module, configured to update, in a case that the preset lane change condition is not met and it is determined to continue to change lanes, an acceleration in the target longitudinal traveling data if the following vehicle does not decelerate, to cause an updated longitudinal speed of the target lane change vehicle to be greater than a longitudinal speed of the following vehicle and less than a longitudinal speed of a preceding vehicle in the target lane; and construct a second lane change trajectory of the target lane change vehicle in the lane change trajectory coordinate system based on the updated longitudinal traveling data and the target transverse traveling data; and

a first original lane return trajectory construction module, configured to update, in a case that the preset lane change condition is not met and it is determined not to continue to change lanes, transverse traveling data and longitudinal traveling data in an original lane return process; and construct a first original lane return trajectory of the target lane change vehicle in the lane change trajectory coordinate system according to the transverse traveling data and the longitudinal traveling data in the original lane return process.

In some embodiments, the target preceding vehicle determining module is further configured to determine the target preceding vehicle from the preceding vehicle in the target lane and a preceding vehicle in the current lane depending on whether a centroid of the target lane change vehicle crosses a lane line of the current lane.

In some embodiments, the first original lane return trajectory construction module is further configured to:

determine transverse traveling data at a starting time instant of returning to an original lane when the preset lane change condition is not met; determine transverse traveling data at an ending time instant of the returning to an original lane; determine the transverse traveling data in the original lane return process according to the transverse traveling data at the starting time instant, the transverse traveling data at the ending time instant, and first preset return time; update, from the preceding vehicle in the target lane and the preceding vehicle in the current lane, a target preceding vehicle in a time period from the starting time instant to the ending time instant in real time, depending on whether the centroid of the target lane change vehicle crosses the lane line of the current lane in the time period from the starting time instant to the ending time instant; and determine the longitudinal traveling data in the original lane return process according to a longitudinal speed of the target lane change vehicle, a longitudinal speed of the target preceding vehicle, and a distance between the target preceding vehicle and the target lane change vehicle in the time period from the starting time instant to the ending time instant.

In some embodiments, the apparatus further includes: a first starting time instant determining module, configured to use the time instant when the preset lane change condition is not met as a starting time instant of straightening a vehicle head; a first transverse traveling data determining module, configured to determine transverse traveling data at the starting time instant; a second transverse traveling data determining module, configured to determine transverse traveling data at an ending time instant of the straightening a vehicle head; a first transverse traveling data update module, configured to determine transverse traveling data in a process of the straightening the vehicle head, according to the transverse traveling data at the starting time instant, the transverse traveling data at the ending time instant, and preset straightening time; a second target preceding vehicle update module, configured to update, from the preceding vehicle in the target lane and the preceding vehicle in the current lane, a target preceding vehicle in a time period from the starting time instant to the ending time instant in real time, depending on whether the centroid of the target lane change vehicle crosses the lane line of the current lane in the time period from the starting time instant to the ending time instant; a first longitudinal traveling data update module, configured to determine longitudinal traveling data in the process of the straightening the vehicle head, according to a longitudinal speed of the target lane change vehicle, a longitudinal speed of the target preceding vehicle, and a distance between the target preceding vehicle and the target lane change vehicle in the time period from the starting time instant to the ending time instant; and a vehicle head straightening trajectory construction module, configured to construct a vehicle head straightening trajectory of the target lane change vehicle in the lane change trajectory coordinate system based on the transverse traveling data and the longitudinal traveling data in the process of the straightening the vehicle head.

According to embodiments of the present invention, a device for constructing a simulated vehicle lane change trajectory is further provided. The device includes a processor and a memory. The memory stores at least one instruction, at least one program, a code set, or an instruction set. The at least one instruction, the at least one program, the code set, or the instruction set is loaded and executed by the processor to perform the method for constructing a simulated vehicle lane change trajectory according to the embodiments of the present application.

According to embodiments of the present invention, a computer-readable storage medium is further provided. The computer-readable storage medium stores at least one instruction, at least one program, a code set, or an instruction set. The at least one instruction, the at least one program, the code set, or the instruction set is loaded and executed by a processor to perform the foregoing method for constructing a simulated vehicle lane change trajectory.

BRIEF DESCRIPTION OF THE DRAWINGS

To describe the technical solutions and advantages in the embodiments of the present application more clearly, the accompanying drawings required for describing the embodiments are described briefly hereinafter. Apparently, the accompanying drawings in the following description show merely some embodiments of the present invention, and a person of ordinary skill in the art may still derive other accompanying drawings from these accompanying drawings without creative efforts.

FIG. 1A is a schematic diagram of an application scenario according to an embodiment of the present invention.
FIG. 1B is a schematic flowchart of a method for constructing a simulated vehicle lane change trajectory according to an embodiment of the present invention.
FIG. 2 is a schematic flowchart of a method for constructing a simulated vehicle lane change trajectory according to an embodiment of the present invention.
FIG. 3 is a schematic diagram of a lane change trajectory coordinate system according to an embodiment of the present invention.
FIG. 4 is a schematic curve diagram of a transverse position (a transverse offset distance) that varies with time in a lane change process according to an embodiment of the present invention.
FIG. 5 is a schematic curve diagram of a transverse speed that varies with time in a lane change process according to an embodiment of the present invention.

FIG. 6 is a schematic curve diagram of a transverse speed that varies with time in a lane change process according to an embodiment of the present invention.

FIG. 7A is a schematic flowchart of updating transverse traveling data and longitudinal traveling data in an original lane return process according to an embodiment of the present invention.

FIG. 7B is a schematic flowchart of a method for constructing a simulated vehicle lane change trajectory in a case that a preset lane change condition is not met according to an embodiment of the present invention.

FIG. 7C is a schematic flowchart of a method for constructing a simulated vehicle lane change trajectory after a vehicle head is straightened according to an embodiment of the present invention.

FIG. 7D is a schematic flowchart of a method for constructing a simulated vehicle lane change trajectory when continuing to change lanes after it is determined that a following vehicle decelerates according to an embodiment of the present invention.

FIG. 7E is a schematic flowchart of a method for constructing a simulated vehicle lane change trajectory during returning to an original lane according to an embodiment of the present invention.

FIG. 8 is a schematic flowchart of simulated lane change driving according to an embodiment of the present invention.

FIG. 9A is a schematic structural diagram of an apparatus for constructing a simulated vehicle lane change trajectory according to an embodiment of the present invention.

FIG. 9B is a schematic structural diagram of an apparatus for constructing a simulated vehicle lane change trajectory according to an embodiment of the present invention.

FIG. 10 is a block diagram showing a hardware structure of a server for performing a method for constructing a simulated vehicle lane change trajectory according to an embodiment of the present invention.

DETAILED DESCRIPTION OF EMBODIMENTS

In the specification, claims, and the foregoing accompanying drawings of the present invention, the terms "first", "second", and so on are intended to distinguish similar objects but do not necessarily indicate a specific order or sequence. The data termed in such a way are interchangeable in proper circumstances, so that the embodiments of the present invention described herein can be implemented in orders other than the order illustrated or described herein. Moreover, the terms "include", "contain" and any other variants mean to cover the non-exclusive inclusion. For example, a process, method, system, product, or server that includes a series of steps or units is not necessarily limited to those steps or units, but may include other steps or units not expressly listed or inherent to such a process, method, product, or device.

In the related art, it is not taken into consideration that in the real world, when traffic is relatively heavy or drivers are fractious, it is likely that a vehicle lane change process may not be completed at one time due to interferences of some factors. Therefore, vehicle lane change scenarios in the related art may result in that simulation results are difficult to reflect the reality, and thus cannot provide effective decision-making support for practical application of automatic driving.

Based on this, according to embodiments of the present invention, a method for constructing a simulated vehicle lane change trajectory is provided, so that a simulated trajectory can reflect the reality better, thereby providing effective decision-making support for practical application of automatic driving.

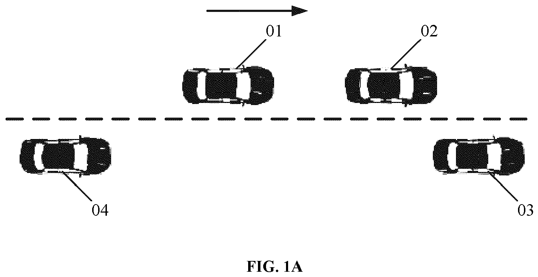

FIG. 1A is a schematic diagram of an application scenario to which a method for constructing a simulated vehicle lane change trajectory is applicable according to an embodiment of the present invention. As shown in FIG. 1A, the application scenario includes at least a simulated vehicle 01, a simulated vehicle 02, a simulated vehicle 03, and a simulated vehicle 04.

The simulated vehicle 01 may be a target lane change vehicle needing to change lanes in a vehicle driving simulation system. The simulated vehicle 02 may be a preceding vehicle that is located in a current lane of the target lane change vehicle and that is in front of the target lane change vehicle in the vehicle driving simulation system. The simulated vehicle 03 may be a preceding vehicle that is located in a target lane of the target lane change vehicle and that is in front of the target lane change vehicle in the vehicle driving simulation system. The simulated vehicle 04 may be a following vehicle that is located in the target lane of the target lane change vehicle and that is behind the target lane change vehicle in the vehicle driving simulation system.

Based on the foregoing application scenario, the embodiments of the present invention provide the method for constructing a simulated vehicle lane change trajectory, executed by the target lane change vehicle, for example, the simulated vehicle 01. Before the simulated vehicle lane change trajectory is constructed, a lane change trajectory coordinate system is constructed by using a position of the target lane change vehicle as an origin, using a center line of a current lane of the target lane change vehicle as an ordinate axis, and using a normal of the center line as an abscissa axis.

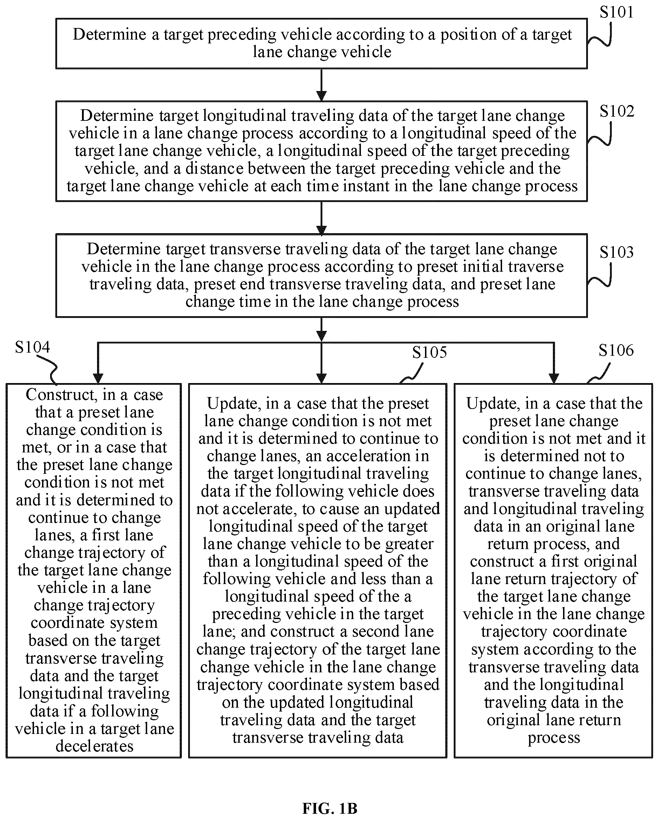

FIG. 1B is a schematic flowchart of a method for constructing a simulated vehicle lane change trajectory according to an embodiment of the present invention. As shown in FIG. 1B, the method for constructing a simulated vehicle lane change trajectory includes the following steps S101 to S106.

In step S101, a target preceding vehicle is determined according to a position of a target lane change vehicle.

In some embodiments, the position of the target lane change vehicle is reflected by a positional relationship between a centroid of the target lane change vehicle and a lane line of a current lane. The target preceding vehicle is determined from the preceding vehicle in the target lane and a preceding vehicle in the current lane, depending on whether the centroid of the target lane change vehicle crosses the lane line of the current lane.

In step S102, target longitudinal traveling data of the target lane change vehicle in a lane change process is determined according to a longitudinal speed of the target lane change vehicle, a longitudinal speed of the target preceding vehicle, and a distance between the target preceding vehicle and the target lane change vehicle at each time instant in the lane change process.

In step S103, target transverse traveling data of the target lane change vehicle in the lane change process is determined according to preset initial transverse traveling data, preset end transverse traveling data, and preset lane change time in the lane change process.

In step S104, in a case that a preset lane change condition is met, or in a case that the preset lane change condition is not met and it is determined to continue to change lanes, a first lane change trajectory of the target lane change vehicle in the lane change trajectory coordinate system is constructed based on the target transverse traveling data and the target longitudinal traveling data if a following vehicle in a target lane decelerates.

In step S105, in a case that the preset lane change condition is not met and it is determined to continue to change lanes, an acceleration in the target longitudinal traveling data is updated if the following vehicle does not decelerate, so that an updated longitudinal speed of the target lane change vehicle is greater than a longitudinal speed of the following vehicle and less than a longitudinal speed of the preceding vehicle in the target lane; and a second lane change trajectory of the target lane change vehicle is constructed in the lane change trajectory coordinate system based on the updated longitudinal traveling data and the target transverse traveling data.

In step S106, in a case that the preset lane change condition is not met and it is determined not to continue to change lanes, transverse traveling data and longitudinal traveling data in an original lane return process are updated; and a first original lane return trajectory of the target lane change vehicle is constructed in the lane change trajectory coordinate system according to the transverse traveling data and the longitudinal traveling data in the original lane return process.

In some embodiments, the process of determining a target preceding vehicle according to a position of a target lane change vehicle includes: determining the target preceding vehicle from the preceding vehicle in the target lane and the preceding vehicle in the current lane, depending on whether the centroid of the target lane change vehicle crosses the lane line of the current lane.

In the method for constructing a simulated vehicle lane change trajectory provided in the present disclosure, a lane change trajectory coordinate system is constructed; then, a traveling status in a lane change process is represented by transverse traveling data and longitudinal traveling data; for different statuses in the lane change process, different lane change trajectories are constructed with reference to the transverse traveling data and the longitudinal traveling data; and an original lane return trajectory is constructed when a lane change cannot be completed at one time because a following vehicle located behind the present vehicle in the target lane accelerates. In this way, a simulated trajectory can reflect the reality better, thereby providing effective decision-making support for practical application of automatic driving.

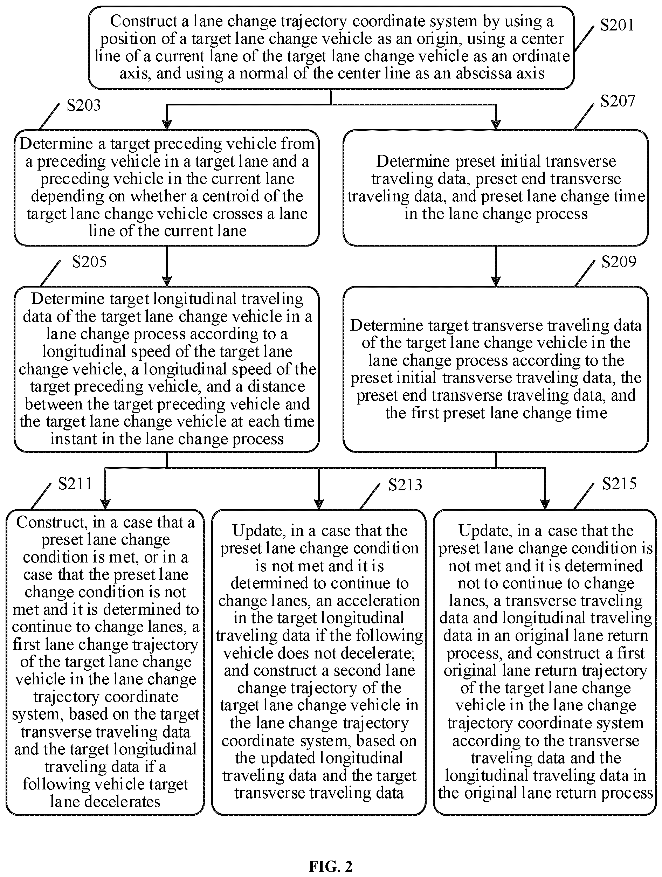

According to embodiments of the present disclosure, invention, a method for constructing a simulated vehicle lane change trajectory is further provided. FIG. 2 is a schematic flowchart of a method for constructing a simulated vehicle lane change trajectory according to an embodiment of the present invention. Although operational steps of the method described in the embodiments or flowcharts are provided in the Specification, more or fewer operational steps may be included based on conventional efforts or non-creative efforts. The order of the steps listed in the embodiments is merely one of multiple step execution orders, and does not indicate the only execution order. When the method is performed in an actual system or server product, the method may be performed according to method orders shown in the embodiments or the accompanying drawings or performed in parallel (for example, in a parallel processor or multi-thread processing environment). As shown in FIG. 2, the method may include steps S201 to S215.

In step S201, a lane change trajectory coordinate system is constructed by using a position of a target lane change vehicle as an origin, using a center line of a current lane of the target lane change vehicle as an ordinate axis, and using a normal of the center line as an abscissa axis.

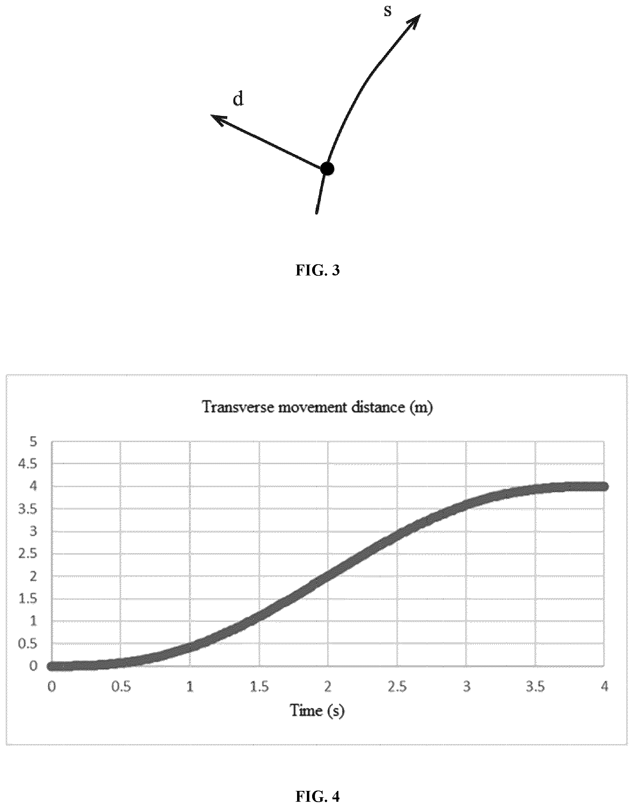

In the embodiment of the present invention, as shown in FIG. 3, the lane change trajectory coordinate system is constructed by using the position of the target lane change vehicle as the origin, using the center line of the lane as the ordinate axis (a direction s indicating the traveling direction), and using the normal of the center line as the abscissa axis (a direction d indicating a positive direction of the abscissa axis). Correspondingly, when a trajectory is subsequently determined in the lane change trajectory coordinate system, descriptions are made by using a longitudinal distance (that is, a distance along the center line in the traveling direction) and a transverse distance (that is, an offset distance from the center line) with reference to the center line of the lane. Traveling data in a lane change process of the target lane change vehicle may include transverse traveling data and longitudinal traveling data. Specifically, the transverse traveling data may include a transverse speed, a transverse acceleration, and a transverse position (that is, a transverse offset distance relative to the center line); and the longitudinal traveling data may include a longitudinal speed, a longitudinal acceleration, and a longitudinal position.

In step S203, a target preceding vehicle is determined from a preceding vehicle in a target lane and a preceding vehicle in the current lane depending on whether a centroid of the target lane change vehicle crosses a lane line of the current lane.

In the embodiment of this specification, the target preceding vehicle may be a vehicle that affects the longitudinal traveling data of the target lane change vehicle in the lane change process of the target lane change vehicle.

In actual applications, when the centroid of the target lane change vehicle crosses the lane line of the current lane, it is considered that the target lane change vehicle has entered the target lane. In this case, impact of a preceding vehicle in an original lane on the present vehicle is not considered, and only impact of a speed, a distance, and the like of the preceding vehicle in the target lane on the target lane change vehicle is considered. The preceding vehicle in the target lane may serve as the target preceding vehicle.

In actual applications, when the centroid of the target lane change vehicle fails to cross the lane line of the current lane, it is considered that the target lane change vehicle is in an initial stage of a lane change, and the speed and the distance of the preceding vehicle in the target lane and a speed and a distance of the preceding vehicle in the current lane are considered together when a longitudinal speed of the target lane change vehicle is to be controlled. In this case, a preceding vehicle having a shorter distance from the target lane change vehicle, among the preceding vehicle in the target lane and the preceding vehicle in the current lane, may serve as the target preceding vehicle.

In step S205, target longitudinal traveling data of the target lane change vehicle in a lane change process is determined according to a longitudinal speed of the target lane change vehicle, a longitudinal speed of the target preceding vehicle, and a distance between the target preceding vehicle and the target lane change vehicle at each time instant in the lane change process.

In the embodiment of this specification, the distance between the target preceding vehicle and the target lane change vehicle may be a longitudinal distance between the target preceding vehicle and the target lane change vehicle.

In actual applications, in a simulation system, each time instant corresponds to a simulation step size, for example, the simulation step size is 1s. Correspondingly, each time instant is one second. In the embodiment of this specification, a time period of the lane change process may be preset. In this case, the target longitudinal traveling data of the target lane change vehicle in the lane change process is determined based on the longitudinal speed of the target lane change vehicle, the longitudinal speed of the target preceding vehicle, and the distance between the target preceding vehicle and the target lane change vehicle at each time instant in the lane change process. Specifically, in the embodiment of this specification, the target longitudinal traveling data of the target lane change vehicle in the lane change process is determined with reference to a follow-up algorithm.

In a specific embodiment, a formula of the follow-up algorithm is as follows:

$$\frac{dv}{dt} = a \left[ 1 - \left( \frac{v}{v_0} \right)^{\delta} - \left( \frac{s^*(v, \Delta v)}{s} \right)^2 \right]$$

$$s^*(v, \Delta v) = s_0 + \max \left[ 0, \ \left( vT + \frac{v\Delta v}{2\sqrt{ab}} \right) \right]$$

where so indicates a minimum safe distance between the target preceding vehicle and the target lane change vehicle; $v_0$ indicates a free flow vehicle speed, and is a constant; $v$ indicates a speed of the target lane change vehicle at a previous time instant (a previous simulation step size); $s$ indicates the distance between the target preceding vehicle and the target lane change vehicle; $T$ indicates a safe time interval; $a$ indicates an acceleration of the target preceding vehicle at the previous time instant; $b$ indicates a comfortable deceleration, and is a constant; and $\Delta v$ indicates a speed difference between the target lane change vehicle and the target preceding vehicle at the previous time instant.

In addition, it is to be understood that, if the lane change process is interrupted due to the safe distance and the target lane change vehicle needs to travel along a straight line or return to the original lane, a current target preceding vehicle is determined depending on whether the centroid of the target lane change vehicle crosses the lane line of the current lane, so as to update the longitudinal traveling data of the target lane change vehicle based on a longitudinal speed of the current target preceding vehicle, and a distance between the current target preceding vehicle and the target lane change vehicle.

In step S207, preset initial transverse traveling data, preset end transverse traveling data, and preset lane change time in the lane change process are determined.

In the embodiment of this specification, a transverse driving behavior is described by using a high-order polynomial. In the lane change process, traveling data of a vehicle in a transverse direction may be regarded as a change in a time period from $t = t_0$ (a lane change starting time instant) to $t = T$ (a lane change ending time instant).

In the embodiment of this specification, the preset initial transverse traveling data corresponding to the lane change starting time instant, the preset end transverse traveling data corresponding to the lane change ending time instant, and the preset lane change time are first determined.

In step S209, target transverse traveling data of the target lane change vehicle in the lane change process is determined according to the preset initial transverse traveling data, the preset end transverse traveling data, and the preset lane change time.

In the embodiment of this specification, the target transverse traveling data of the target lane change vehicle in the lane change process is determined with reference to the high-order polynomial. Specifically, assuming that a lane change starting time instant $t_0 = 0$, $(Qd_0, Vd_0, Ad_0)$ is used for describing a position, a speed, and an acceleration in the transverse direction respectively at a time instant $t = 0$, $(Qd_T, Vd_T, Ad_T)$ is used for describing a position, a speed, and an acceleration in the transverse direction respectively at a time instant $t = T$, and h (which is usually a lane width) represents a distance from a center line of the original lane to a center line of the target lane. Correspondingly, $Vd_0 = Vd_T = 0$, $Ad_0 = Ad_T = 0$, $Qd_0 = 0$, and $Qd_T = h$.

In this way, there are six boundary conditions. Correspondingly, a fifth-order polynomial is used for describing a position of the vehicle in the transverse direction at any time instant, that is, $Qd = a_0 + a_1t + a_2t_2 + a_3t_3 + a_4t_4 + a_5t_5$; and polynomial coefficients $a_0$, $a_1$, $a_2$, $a_3$, $a_4$ and $a_5$ can be solved based on $Vd_0 = Vd_T = 0$, $Ad_0 = Ad_T = 0$, $Qd_0 = 0$, and $Qd_T = h$.

$$a_0 = Qd_0$$

$$a_1 = Vd_0$$

$$a_2 = 0.5a_0$$

$$a_3 = 1/2T_3[20h - (8Vd_T + 12Vd_0)T - (3a_0 - a_1)T_2$$

$$a_4 = 1/2T_4[-30h - (14Vd_T + 16Vd_0)T + (3a_0 - 2a_1)T_2$$

$$a_5 = 1/2T_5[12h - 6(Vd_T + Vd_0)T - (a_1 - a_0)T_2.$$

After the polynomial coefficients $a_0$, $a_1$, $a_2$, $a_3$, $a_4$, and $a_5$ are obtained, a transverse position of the target lane change vehicle at each time instant may be determined. In a specific embodiment, as shown in FIG. 4, it is assumed that the lane width is 4 m, and the lane change time period is 4s. FIG. 4 is a schematic curve diagram of a transverse position (a transverse offset distance) that varies with time in a lane change process according to an embodiment of the present invention.

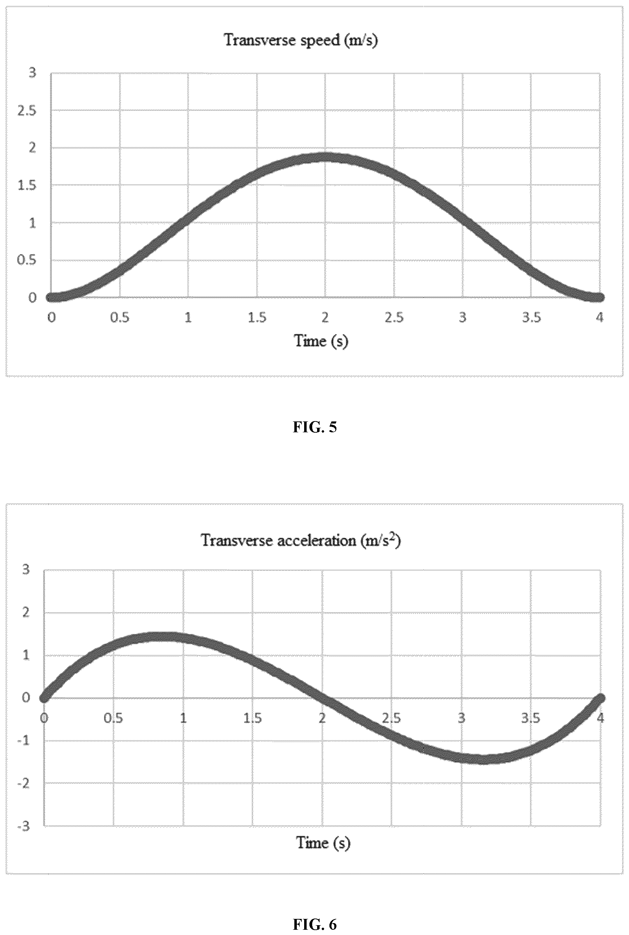

Further, based on the transverse position and transverse speeds in the preset initial transverse traveling data and the preset end transverse traveling data in the lane change process, a transverse speed at each time instant in the lane change process is determined. In a specific embodiment, as shown in FIG. 5, it is assumed that the lane width is 4 m, and the lane change time period is 4s. FIG. 5 is a schematic curve diagram of a transverse speed that varies with time in a lane change process according to an embodiment of the present invention.

Further, a transverse acceleration in the lane change process is determined based on the transverse speed in the lane change process. FIG. 6 is a schematic curve diagram of a transverse speed that varies with time in a lane change process according to an embodiment of the present invention.

In step S211, in a case that a preset lane change condition is met, or in a case that the preset lane change condition is not met and it is determined to continue to change lanes, a first lane change trajectory of the target lane change vehicle in the lane change trajectory coordinate system is constructed based on the target transverse traveling data and the target longitudinal traveling data if a following vehicle in a target lane decelerates.

In actual applications, in the lane change process of the vehicle, when an intention of changing lanes is determined, it is necessary to determine whether a lane change condition is met based on the consideration of safety. In the embodiment of this specification, the lane change condition may include that a distance between the target lane change vehicle and the preceding vehicle and/or the following vehicle in the target lane is greater than a specific preset safe distance.

In the embodiment of this specification, in a case that the preset lane change condition is met, or in a case that the preset lane change condition is not met and it is determined to continue to change lanes, the first lane change trajectory of the target lane change vehicle in the lane change trajectory coordinate system is constructed based on the target transverse traveling data and the target longitudinal traveling data if the following vehicle in the target lane decelerates. Specifically, first target lane change traveling data (including a speed, an acceleration, and a position) of the target lane change vehicle is determined according to the target transverse traveling data and the target longitudinal traveling data, and the first lane change trajectory of the target lane change vehicle is constructed in the lane change trajectory coordinate system based on the first target lane change traveling data.

In step S213, in a case that the preset lane change condition is not met and it is determined to continue to change lanes, an acceleration in the target longitudinal traveling data is updated if the following vehicle does not decelerate, so that an updated longitudinal speed of the target lane change vehicle is greater than a longitudinal speed of the following vehicle and less than a longitudinal speed of a preceding vehicle in the target lane; and a second lane change trajectory of the target lane change vehicle is constructed in the lane change trajectory coordinate system based on the updated longitudinal traveling data and the target transverse traveling data.

In actual applications, in a case that the preset lane change condition is not met and it is determined to continue to change lanes, acceleration needs to be performed longitudinally to avoid a collision accident if the following vehicle does not decelerate, so that a longitudinal acceleration of the target lane change vehicle is higher than that of the following vehicle in the target lane, and is less than a maximum acceleration (the maximum acceleration is determined based on the longitudinal traveling data of the target lane change vehicle and longitudinal traveling data of the preceding vehicle in the target lane, to ensure that the target lane change vehicle does not collide with the preceding vehicle in the target lane while accelerating) and the longitudinal traveling data of the preceding vehicle in the target lane. In the embodiment of this specification, in a case that the preset lane change condition is not met and it is determined to continue to change lanes, the acceleration in the target longitudinal traveling data is updated if the following vehicle does not decelerate, so that the updated longitudinal speed of the target lane change vehicle is greater than the longitudinal speed of the following vehicle and less than the longitudinal speed of the preceding vehicle in the target lane. Subsequently, the second lane change trajectory of the target lane change vehicle is constructed in the lane change trajectory coordinate system based on the updated longitudinal traveling data and the target transverse traveling data. Specifically, second target lane change traveling data is determined according to the updated longitudinal traveling data and the target transverse traveling data, and the second lane change trajectory of the target lane change vehicle is constructed in the lane change trajectory coordinate system based on the second target lane change traveling data.

In step S215, in a case that the preset lane change condition is not met and it is determined not to continue to change lanes, transverse traveling data and longitudinal traveling data in an original lane return process are updated; and a first original lane return trajectory of the target lane change vehicle is constructed in the lane change trajectory coordinate system according to the transverse traveling data and the longitudinal traveling data in the original lane return process.

In the embodiment of this specification, it a case that the preset lane change condition is not met and it is determined not to continue to change lanes, the original lane is immediately returned to, and then, a surrounding condition is observed to determine whether to restart a new lane change process. Specifically, the transverse traveling data and the longitudinal traveling data in the original lane return process are updated, and the first original lane return trajectory of the target lane change vehicle is constructed in the lane change trajectory coordinate system based on the transverse traveling data and the longitudinal traveling data in the original lane return process.

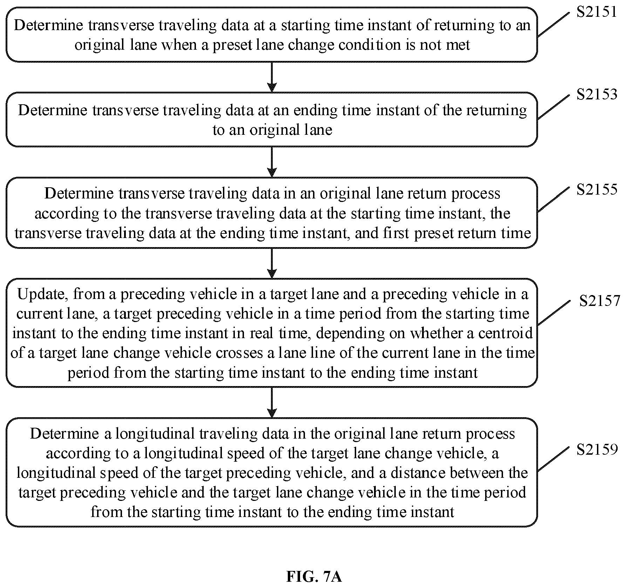

In an embodiment of this specification, as shown in FIG. 7A, the process of updating transverse traveling data and longitudinal traveling data in an original lane return process may include steps S2151 to S2189 as follows.

In step S2151, transverse traveling data at a starting time instant of returning to an original lane is determined. At the starting time instant, the preset lane change condition is not met, and it is determined not to continue to change lanes.

In the embodiment of this specification, in a case that the preset lane change condition is not met, the target lane change vehicle travels based on the target transverse traveling data and the target longitudinal traveling data. Correspondingly, in a case the preset lane change condition is not met at a time instant, transverse traveling data at the time instant (the starting time instant of returning to an original lane) is determined from the target transverse traveling data.

S2153: transverse traveling data at an ending time instant of the returning to an original lane is determined.

In the embodiment of this specification, the original lane return process refers to returning to a center line of the original lane. A transverse position, a transverse acceleration, and a speed in the transverse traveling data at the ending time instant are all 0.

In step S2155, the transverse traveling data in the original lane return process is determined according to the transverse traveling data at the starting time instant, the transverse traveling data at the ending time instant, and first preset return time.

In the embodiment of this specification, if the transverse traveling data at the starting time instant of the returning to an original lane is $(Qd_c, Vd_c, Ad_c)$, the transverse traveling data at the ending time instant is (0, 0, 0), and a time required for returning to an original lane is a first preset return time $T_1$, the transverse traveling data in the original lane return process is determined with reference to the polynomial. Specifically, for determining of the transverse traveling data in the original lane return process by means of the polynomial, one may refer to the foregoing related steps, and details are not described herein again.

In step S2157, from the preceding vehicle in the target lane and the preceding vehicle in the current lane, a target preceding vehicle in a time period from the starting time instant to the ending time instant is updated in real time, depending on whether the centroid of the target lane change vehicle crosses the lane line of the current lane in the time period from the starting time instant to the ending time instant.

In the embodiment of this specification, in the original lane return process, the centroid of the target lane change vehicle is changed from a state that the centroid crosses the lane line of the current lane to a state that the centroid does not cross the lane line of the current lane. In a case that the centroid of the target lane change vehicle does not cross the lane line of the current lane, a preceding vehicle with a smaller current distance from the target lane change vehicle is selected as the target preceding vehicle, from the preceding vehicle in the target lane and the preceding vehicle in the current lane.

In step S2159, according to a longitudinal speed of the target lane change vehicle, a longitudinal speed of the target preceding vehicle, and a distance between the target preceding vehicle and the target lane change vehicle in the time period from the starting time instant to the ending time instant, the longitudinal traveling data in the original lane return process is determined.

In the embodiment of this specification, for the process of determining longitudinal traveling data in the original lane return process, one may refer to the foregoing related steps of determining the target longitudinal traveling data, and details are not described herein again.

In the embodiment of this specification, the process of constructing a first original lane return trajectory of the target lane change vehicle in the lane change trajectory coordinate system according to the transverse traveling data and the longitudinal traveling data in the original lane return process may include: determining first target lane change traveling data of the target lane change vehicle in the original lane return process according to the transverse traveling data and the target longitudinal traveling data in the original lane return process; and constructing the first original lane return trajectory of the target lane change vehicle in the lane change trajectory coordinate system based on the first target lane change traveling data.

It may be learned from the technical solutions in the embodiments of this specification that, a lane change trajectory coordinate system is constructed; a traveling status in a lane change process is represented by transverse traveling data and longitudinal traveling data; for different statuses in the lane change process, different lane change trajectories are constructed with reference to the transverse traveling data and the longitudinal traveling data; and an original lane return trajectory is constructed when a lane change cannot be completed at one time because a following vehicle located behind the present vehicle in the target lane accelerates. In this way, the simulated trajectory can reflect the reality better, thereby providing effective decision-making support for practical application of automatic driving.

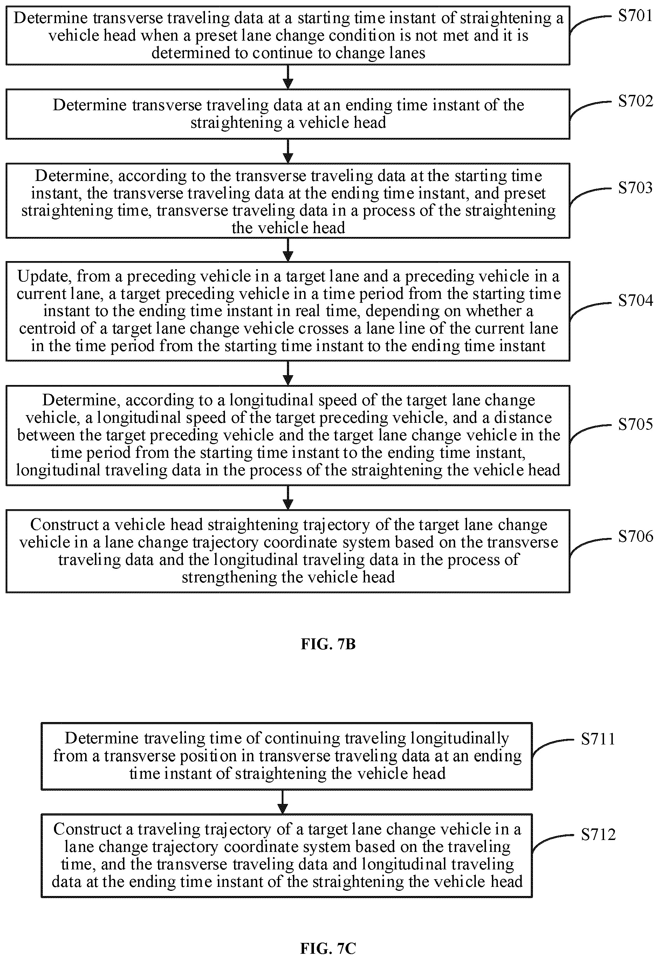

In some embodiments, in a case that the preset lane change condition is not met and it is determined not to continue to change lanes, a vehicle head is straightened to be parallel to the lane line, and the target lane change vehicle keeps traveling along a straight line, so that a status of a following vehicle is further observed, and a next action is determined depending on whether the following vehicle decelerates. FIG. 7B is a schematic flowchart of a method for constructing a simulated vehicle lane change trajectory in a case that a preset lane change condition is not met according to an embodiment of the present invention. As shown in FIG. 7B, in a case that the preset lane change condition is not met, the method further includes steps S701 to S706 as follows.

In step S701, transverse traveling data at a starting time instant of straightening a vehicle head is determined. At the starting time instant, the preset lane change condition is not met, and it is determined not to continue to change lanes.

In step S702, transverse traveling data at an ending time instant of the straightening the vehicle head is determined.

In step S703, according to the transverse traveling data at the starting time instant, the transverse traveling data at the ending time instant, and preset straightening time, transverse traveling data in a process of the straightening the vehicle head is determined.

In the embodiment of this specification, it is assumed that transverse traveling data at a starting time instant $t_c$ of straightening a vehicle head is $(Qd_c, Vd_c, Ad_c)$, transverse traveling data at an ending time instant is $(Qd_c, 0, 0)$. In other words, during the process that the vehicle head is straightened, the vehicle is kept at the same transverse position, and a transverse acceleration and a transverse speed are both 0. Assuming that a preset vehicle head straightening time is $T_2$, the transverse traveling data of the target lane change vehicle is updated with reference to the polynomial.

For specific steps, one may refer to the foregoing related steps, and details are not described herein again.

In step S704, from a preceding vehicle in a target lane and a preceding vehicle in a current lane, a target preceding vehicle in a time period from the starting time instant to the ending instant is updated in real time, depending on whether a centroid of the target lane change vehicle crosses a lane line of the current lane in the time period from the starting time instant to the ending time instant.

In step S705, according to a longitudinal speed of the target lane change vehicle, a longitudinal speed of the target preceding vehicle, and a distance between the target preceding vehicle and the target lane change vehicle in the time period from the starting time instant to the ending time instant, longitudinal traveling data in the process of the straightening a vehicle head is determined.

In the embodiment of this specification, the target preceding vehicle is timely updated depending on whether the centroid of the target lane change vehicle crosses the lane line of the current lane in the process of the straightening the vehicle head. Then, the longitudinal traveling data in the process of the straightening the vehicle head is updated with reference to the longitudinal speed of the target preceding vehicle and the distance between the target preceding vehicle and the target lane change vehicle.

In Step S706, a vehicle head straightening trajectory of the target lane change vehicle is constructed in a lane change trajectory coordinate system based on the transverse traveling data and the longitudinal traveling data in the process of the straightening a vehicle head.

Target straightening traveling data in the process of the straightening the vehicle head is determined according to the transverse traveling data in the process of the straightening the vehicle head and the target longitudinal traveling data; and a vehicle head straightening trajectory of the target lane change vehicle is constructed in the lane change trajectory coordinate system based on the target straightening traveling data.

In the embodiment of this specification, after the vehicle head is straightened, the vehicle travels along a straight line for a period of time. FIG. 7C is a schematic flowchart of a method for constructing a simulated vehicle lane change trajectory after a vehicle head is straightened according to an embodiment of the present invention. As shown in FIG. 7C, the method further includes the following steps S711 and S712.

In step S711, traveling time of continuing traveling longitudinally from a transverse position in the transverse traveling data at the ending time instant of the straightening a vehicle head is determined.

In step S712, a traveling trajectory of the target lane change vehicle is constructed in the lane change trajectory coordinate system based on the traveling time and the transverse traveling data and the longitudinal traveling data at the ending time instant of the straightening the vehicle head.

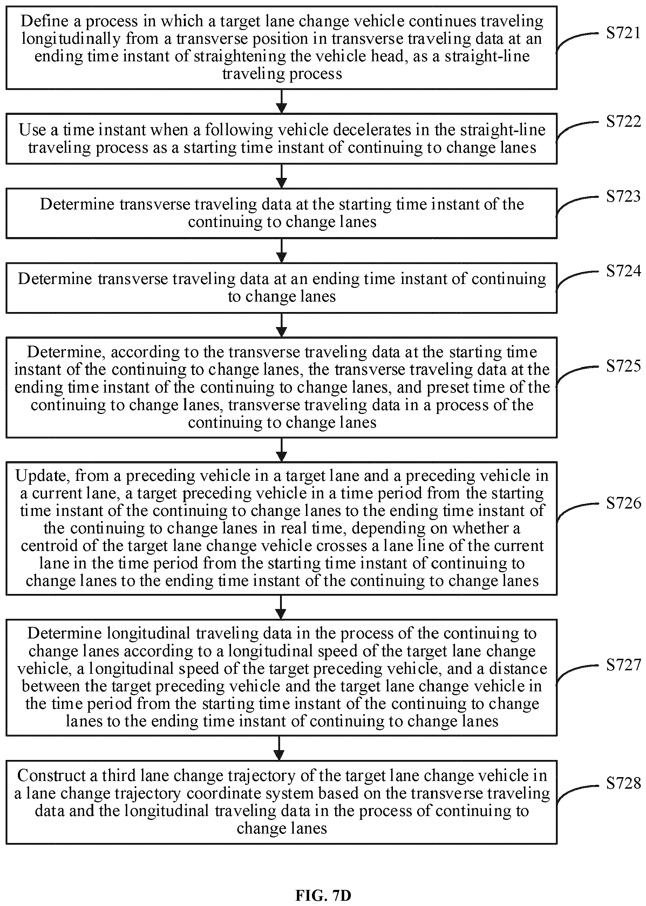

In the embodiment of this specification, after the vehicle head is straightened, in the straight-line traveling process, whether the following vehicle decelerates is observed. After the following vehicle decelerates, the target lane change vehicle continues to change lanes. FIG. 7D is a schematic flowchart of a method for constructing a simulated vehicle lane change trajectory when continuing to change lanes after it is determined that a following vehicle decelerates according to an embodiment of the present invention. As shown in FIG. 7D, the method further includes the following steps S721 to S728.

In step S721, a process in which the target lane change vehicle continues traveling longitudinally from a transverse position in the transverse traveling data at the ending time instant of the straightening a vehicle head, is defined as a straight-line traveling process.

In step S722, a time instant when the following vehicle decelerates in the straight-line traveling process serves as a starting time instant of continuing to change lanes.

In step S723, transverse traveling data at the starting time instant of the continuing to change lanes is determined.

In step S724, transverse traveling data at an ending time instant of the continuing to change lanes is determined.

In step S725, according to the transverse traveling data at the starting time instant of the continuing to change lanes, the transverse traveling data at the ending time instant of the continuing to change lanes, and preset time of the continuing to change lanes, transverse traveling data in a process of the continuing to change lanes is determined.

In the embodiment of this specification, it is assumed that the transverse traveling data at the starting time instant of the continuing to change lanes is $(Qd_c, 0, 0)$, the transverse traveling data at the ending time instant of the continuing to change lanes is $(h, 0, 0)$, and h is the lane width. In other words, the target lane change vehicle moves by a distance of one lane relative to the center line of the original lane at the ending time instant of continuing to change lanes. Time required for continuing to change lanes is $T_4$. Similarly, the transverse traveling data of the target lane change vehicle is updated with reference to the polynomial. For specific steps, one may refer to the foregoing related steps, and details are not described herein again.

In step S726, from the preceding vehicle in the target lane and the preceding vehicle in the current lane, a target preceding vehicle in a time period from the starting time instant of the continuing to change lanes to the ending time instant of the continuing to change lanes is updated in real time, depending on whether the centroid of the target lane change vehicle crosses the lane line of the current lane in the time period from the starting time instant of the continuing to change lanes to the ending time instant of the continuing to change lanes.

In step S727, longitudinal traveling data in the process of the continuing to change lanes is determined according to a longitudinal speed of the target lane change vehicle, a longitudinal speed of the target preceding vehicle, and a distance between the target preceding vehicle and the target lane change vehicle in the time period from the starting time instant of the continuing to change lanes to the ending time instant of the continuing to change lanes.

In the embodiments of this specification, the target preceding vehicle is timely updated depending on whether the centroid of the target lane change vehicle crosses the lane line of the current lane in the process of the continuing to change lanes. Then, the longitudinal traveling data in the process of the continuing to change lanes is updated with reference to the longitudinal speed of the target preceding vehicle and the distance between the target preceding vehicle and the target lane change vehicle.

In step S728, a third lane change trajectory of the target lane change vehicle is constructed in the lane change trajectory coordinate system based on the transverse traveling data and the longitudinal traveling data in the process of the continuing to change lanes.

Third target lane change traveling data in the process of the continuing to change lanes is determined according to the transverse traveling data and the target longitudinal traveling data in the process of the continuing to change lanes, and a third lane change trajectory of the target lane change vehicle is constructed in the lane change trajectory coordinate system based on the third target lane change traveling data.

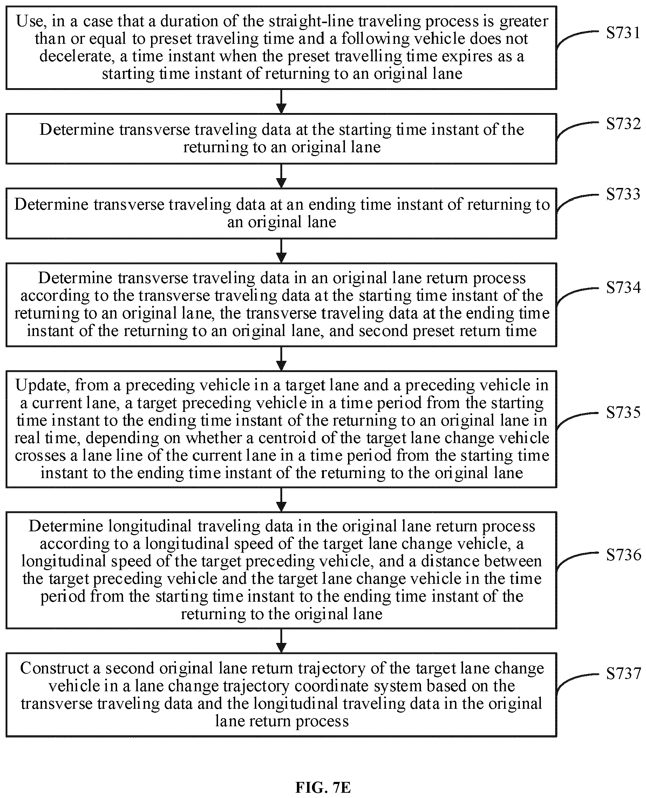

In the embodiment of this specification, after the vehicle head is straightened, in the straight-line traveling process, whether the following vehicle decelerates is observed. If the following vehicle still does not decelerate after the target lane change vehicle travels along a straight line for a period of time, the original lane is returned to. FIG. 7E is a schematic flowchart of a method for constructing a simulated vehicle lane change trajectory during returning to an original lane according to an embodiment of the present invention. As shown in FIG. 7E, the method further includes the following steps S731 and S737.

In step S731, in a case that a duration of the straight-line traveling process is greater than or equal to preset traveling time and a following vehicle does not decelerate, a time instant when the preset traveling time expires serves as a starting time instant of returning to an original lane.

In step S732, transverse traveling data at the starting time instant of the returning to an original lane is determined.

In step S733, transverse traveling data at an ending time instant of the returning to an original lane is determined.

In step S734, transverse traveling data in an original lane return process is determined according to the transverse traveling data at the starting time instant of the returning to an original lane, the transverse traveling data at the ending time instant of the returning to an original lane, and second preset return time.

In the embodiments of this specification, it is assumed that the transverse traveling data at the starting time instant of the returning to an original lane is $(Qd_c, 0, 0)$, the transverse traveling data at the ending time instant of the returning to an original lane is $(0, 0, 0)$, and a time required for returning to the original lane is $T_5$. Similarly, the transverse traveling data of the target lane change vehicle is updated with reference to the polynomial. For specific steps, one may refer to the foregoing related steps, and details are not described herein again.

In step S735, from the preceding vehicle in the target lane and the preceding vehicle in the current lane, a target preceding vehicle in a time period from the starting time instant to the ending time instant of the returning to an original lane is updated in real time, depending on whether the centroid of the target lane change vehicle crosses the lane line of the current lane in the time period from the starting time instant to the ending time instant of the returning to an original lane.

In step S736, longitudinal traveling data in the original lane return process is determined according to a longitudinal speed of the target lane change vehicle, a longitudinal speed of the target preceding vehicle, and a distance between the target preceding vehicle and the target lane change vehicle in the time period from the starting time instant to the ending time instant of the returning to an original lane.

In the embodiments of this specification, the target preceding vehicle is timely updated depending on whether the centroid of the target lane change vehicle crosses the lane line of the current lane in the original lane return process. Then, the longitudinal traveling data in the original lane return process is updated with reference to the longitudinal speed of the target preceding vehicle and the distance between the target preceding vehicle and the target lane change vehicle.

In step S737, a second original lane return trajectory of the target lane change vehicle is constructed in the lane change trajectory coordinate system based on the transverse traveling data and the longitudinal traveling data in the original lane return process.

Second target returning traveling data in the original lane return process is determined according to the transverse traveling data in the original lane return process and the target longitudinal traveling data, and a second original lane return trajectory of the target lane change vehicle is constructed in the lane change trajectory coordinate system based on the second target returning traveling data.

In some other embodiments, in a case that the preset lane change condition is not met and it is determined to continue to change lanes, the target lane change vehicle still change lanes based on the target transverse traveling data and the longitudinal traveling data, resulting in a collision accident. In this case, the collision accident is recorded.

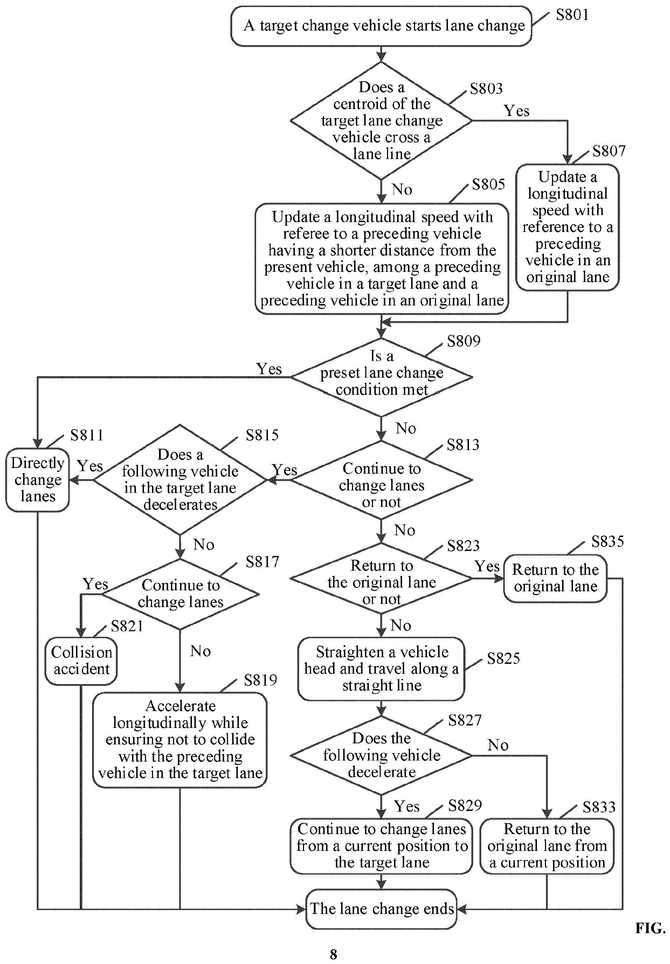

In a specific embodiment, FIG. 8 is a schematic flowchart of simulated lane change driving according to an embodiment of the present invention. Specifically, the method may include steps S801 to steps S833 as follows.

In step S801, a target lane change vehicle starts a lane change.

In step S803, it is determined whether a centroid of the target lane change vehicle crosses a lane line.

In step S805, in a case that it is determined that the centroid does not cross the lane line in step S803, a longitudinal speed is updated with reference to a preceding vehicle having a shorter distance from the present vehicle, among a preceding vehicle in a target lane and a preceding vehicle in an original lane.

In step S807, in a case that it is determined that the centroid crosses the lane line in step S803, a longitudinal speed is updated with reference to a preceding vehicle in an original lane.

In step S809, it is determined whether a preset lane change condition is met.

In step S811, lanes are changed directly in a case that the preset lane change condition is met.

In step S813, it is determined whether to continue to change lanes in a case that the preset lane change condition is not met.

In step S815, it is determined whether a following vehicle in the target lane decelerates, when it is determined to continue to change lanes.

The method returns to step S811, that is, lanes are changed directly, in a case that the following vehicle decelerates.

In step S817, it is determined whether to continue to change lanes in a case that the following vehicle does not decelerate.

In step S819, when it is determined not to continue to change lanes, the target lane change vehicle accelerates longitudinally but should not collide with the preceding vehicle in the target lane.

In step S821, a collision accident is recorded if the target lane change vehicle continues to change lanes.

In step S823, it is determined whether to return to the original lane in a case that a determination result in step S813 is negative.

In step S825, a vehicle head is straightened and the target lane change vehicle travels along a straight line, if the vehicle does not return to the original lane.

In step S827, it is determined whether the following vehicle decelerates.

In step S829, the target lane change vehicle continues to change lanes from a current position, in a case that the following vehicle decelerates.

In step S831, the target lane change vehicle returns to the original lane from the current position in a case that the following vehicle does not decelerate.

In step S833, the target lane change vehicle returns to the original lane in a case that a determination result in step S823 is positive.

In the lane change scenarios formed by the trajectories constructed based on the method for constructing a simulated vehicle lane change trajectory provided in this specification, an actual lane change scenario can be better simulated in simulated driving.

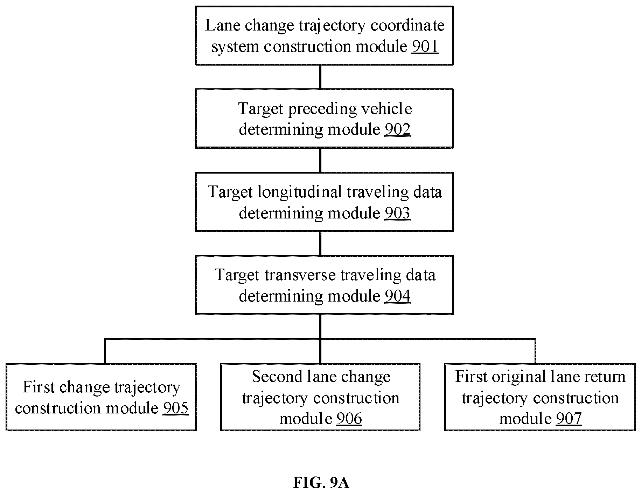

According to embodiments of the present invention, an apparatus for constructing a simulated vehicle lane change trajectory is further provided. As shown in FIG. 9A, the apparatus includes:

a lane change trajectory coordinate system construction module 901, configured to construct a lane change trajectory coordinate system by using a position of a target lane change vehicle as an origin, using a center line of a current lane of the target lane change vehicle as an ordinate axis, and using a normal of the center line as an abscissa axis;

a target preceding vehicle determining module 902, configured to determine a target preceding vehicle according to the position of the target lane change vehicle.

a target longitudinal traveling data determining module 903, configured to determine target longitudinal traveling data of the target lane change vehicle in a lane change process according to a longitudinal speed of the target lane change vehicle, a longitudinal speed of the target preceding vehicle, and a distance between the target preceding vehicle and the target lane change vehicle at each time instant in the lane change process;

a target transverse traveling data determining module 904, configured to determine target transverse traveling data of the target lane change vehicle in the lane change process according to preset initial transverse traveling data, preset end transverse traveling data, and preset lane change time in the lane change process;

a first lane change trajectory construction module 905, configured to construct, in a case that a preset lane change condition is met, or in a case that the preset lane change condition is not met and it is determined to continue to change lanes, a first lane change trajectory of the target lane change vehicle in the lane change trajectory coordinate system based on the target transverse traveling data and the target longitudinal traveling data if a following vehicle in a target lane decelerates;

a second lane change trajectory construction module 906, configured to update, in a case that the preset lane change condition is not met and it is determined to continue to change lanes, an acceleration in the target longitudinal traveling data if the following vehicle does not decelerate, so that an updated longitudinal speed of the target lane change vehicle is greater than a longitudinal speed of the following vehicle and less than a longitudinal speed of a preceding vehicle in the target lane; and construct a second lane change trajectory of the target lane change vehicle in the lane change trajectory coordinate system based on the updated longitudinal traveling data and the target transverse traveling data; and

a first original lane return trajectory construction module 907, configured to update, in a case that the preset lane change condition is not met and it is determined not to continue to change lanes, transverse traveling data and longitudinal traveling data in an original lane return process; and construct a first original lane return trajectory of the target lane change vehicle in the lane change trajectory coordinate system according to the transverse traveling data and the longitudinal traveling data in the original lane return process.

In some embodiments, the target preceding vehicle determining module 902 is further configured to determine the target preceding vehicle from the preceding vehicle in the target lane and a preceding vehicle in the current lane, depending on whether a centroid of the target lane change vehicle crosses a lane line of the current lane.

In some embodiments, the target transverse traveling data determining module 904 includes a data determining sub-module and a target transverse traveling data determining sub-module.

The data determining sub-module is configured to determine the preset initial transverse traveling data, the preset end transverse traveling data, and the preset lane change time in the lane change process.

The target transverse traveling data determining sub-module is configured to determine target transverse traveling data of the target lane change vehicle in the lane change process according to the preset initial transverse traveling data, the preset end transverse traveling data, and the preset lane change time.

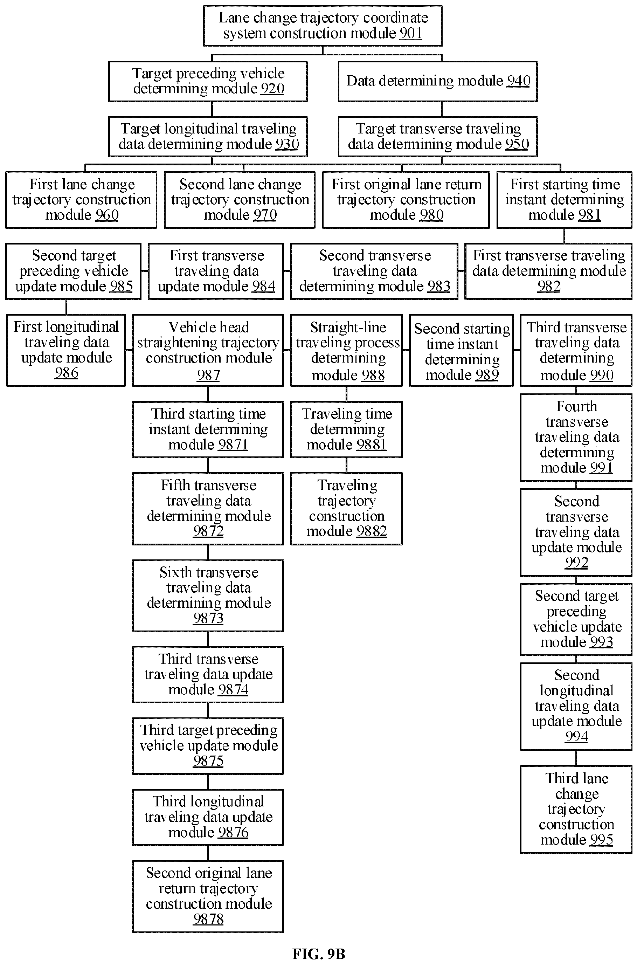

According to embodiments of the present invention, an apparatus for constructing a simulated vehicle lane change trajectory is further provided. As shown in FIG. 9B, the apparatus includes:

a lane change trajectory coordinate system construction module 910, configured to construct a lane change trajectory coordinate system by using a position of a target lane change vehicle as an origin, using a center line of a current lane of the target lane change vehicle as an ordinate axis, and using a normal of the center line as an abscissa axis;

a target preceding vehicle determining module 920, configured to determine a target preceding vehicle from the preceding vehicle in a target lane and a preceding vehicle in a current lane, depending on whether a centroid of the target lane change vehicle crosses a lane line of the current lane.

a target longitudinal traveling data determining module 930, configured to determine target longitudinal traveling data of the target lane change vehicle in a lane change process according to a longitudinal speed of the target lane change vehicle, a longitudinal speed of the target preceding vehicle, and a distance between the target preceding vehicle and the target lane change vehicle at each time instant in the lane change process;

a data determining module 940, configured to determine preset initial transverse traveling data, preset end transverse traveling data, and preset lane change time in the lane change process;

a target transverse traveling data determining module 950, configured to determine target transverse traveling data of the target lane change vehicle in the lane change process according to the preset initial transverse traveling data, the preset end transverse traveling data, and the preset lane change time;

a first lane change trajectory construction module 960, configured to construct, in a case that a preset lane change condition is met, or in a case that the preset lane change condition is not met and it is determined to continue to change lanes, a first lane change trajectory of the target lane change vehicle in the lane change trajectory coordinate system based on the target transverse traveling data and the target longitudinal traveling data if a following vehicle in a target lane decelerates;

a second lane change trajectory construction module 970, configured to update, in a case that the preset lane change condition is not met and it is determined to continue to change lanes, an acceleration in the target longitudinal traveling data if the following vehicle does not decelerate, so that an updated longitudinal speed of the target lane change vehicle is greater than a longitudinal speed of the following vehicle and less than a longitudinal speed of a preceding vehicle in the target lane; and construct a second lane change trajectory of the target lane change vehicle in the lane change trajectory coordinate system based on the updated longitudinal traveling data and the target transverse traveling data; and

a first original lane return trajectory construction module 980, configured to update, in a case that the preset lane change condition is not met and it is determined not to continue to change lanes, transverse traveling data and longitudinal traveling data in an original lane return process; and construct a first original lane return trajectory of the target lane change vehicle in the lane change trajectory coordinate system according to the transverse traveling data and the longitudinal traveling data in the original lane return process.

In some embodiments, the first original lane return trajectory construction module 980 is further configured to:

determine traverse traveling data at a starting time instant of returning to an original lane when the preset lane change condition is not met;

determine transverse traveling data at an ending time instant of the returning to an original lane;

determine the transverse traveling data in the original lane return process according to the transverse traveling data at the starting time instant, the transverse traveling data at the ending time instant, and first preset return time;

update, from the preceding vehicle in the target lane and the preceding vehicle in the current lane, a target preceding vehicle in a time period from the starting time instant to the ending time instant in real time, depending on whether the centroid of the target lane change vehicle crosses the lane line of the current lane in the time period from the starting time instant to the ending time instant; and

determine the longitudinal traveling data in the original lane return process according to a longitudinal speed of the target lane change vehicle, a longitudinal speed of the target preceding vehicle, and a distance between the target preceding vehicle and the target lane change vehicle in the time period from the starting time instant to the ending time instant.

In some embodiments, in a case that the preset lane change condition is not met, the apparatus further includes: a first starting time instant determining module 981, configured to determine the time instant when the preset lane change condition is not met as a starting time instant of straightening a vehicle head; a first transverse traveling data determining module 982, configured to determine transverse traveling data at the starting time instant; a second transverse traveling data determining module 983, configured to determine transverse traveling data at an ending time instant of the straightening a vehicle head; a first transverse traveling data update module 984, configured to determine transverse traveling data in a process of the straightening the vehicle head, according to the transverse traveling data at the starting time instant, the transverse traveling data at the ending time instant, and preset straightening time; a second target preceding vehicle update module 985, configured to update, from the preceding vehicle in the target lane and the preceding vehicle in the current lane, a target preceding vehicle in a time period from the starting time instant to the ending time instant in real time, depending on whether the centroid of the target lane change vehicle crosses the lane line of the current lane in the time period from the starting time instant to the ending time instant; a first longitudinal traveling data update module 986, configured to determine longitudinal traveling data in the process of the straightening the vehicle head, according to a longitudinal speed of the target lane change vehicle, a longitudinal speed of the target preceding vehicle, and a distance between the target preceding vehicle and the target lane change vehicle in the time period from the starting time instant to the ending time instant; and a vehicle head straightening trajectory construction module 987, configured to construct a vehicle head straightening trajectory of the target lane change vehicle in the lane change trajectory coordinate system based on the transverse traveling data and the longitudinal traveling data in the process of the straightening the vehicle head.

In some embodiments, the apparatus further includes: a straight-line traveling process determining module 988, configured to define a process in which the target lane change vehicle continues traveling longitudinally from a transverse position in the transverse traveling data at the ending time instant of the straightening a vehicle head as a straight-line traveling process; a second starting time instant determining module 989, configured to determine a time instant when the following vehicle decelerates in the straight-line traveling process as a starting time instant of continuing changing a lane; a third transverse traveling data determining module 990, configured to determine transverse traveling data at the stating time instant of the continuing to change lanes; a fourth transverse traveling data determining module 991, configured to determine transverse traveling data at an ending time instant of the continuing to change lanes; a second transverse traveling data update module 992, configured to determine transverse traveling data in a process of the continuing to change lanes, according to the transverse traveling data at the starting time instant, the transverse traveling data at the ending time instant, and preset time of the continuing to change lanes; a second target preceding vehicle update module 993, configured to update, from the preceding vehicle in the target lane and the preceding vehicle in the current lane, the target preceding vehicle in a time period from the starting time instant of the continuing to change lanes to the ending time instant of the continuing to change lanes in real time, depending on whether the centroid of the target lane change vehicle crosses the lane line of the current lane in a time period from the starting time instant of the continuing to change lanes to the ending time instant of the continuing to change lanes; a second longitudinal traveling data update module 994, configured to determine longitudinal traveling data in the process of the continuing to change lanes according to a longitudinal speed of the target lane change vehicle, a longitudinal speed of the target preceding vehicle, and a distance between the target preceding vehicle and the target lane change vehicle in the time period from the starting time instant of the continuing to change lanes to the ending time instant of the continuing to change lanes; and a third lane change trajectory construction module 995, configured to construct a third lane change trajectory of the target lane change vehicle in the lane change trajectory coordinate system based on the transverse traveling data and the longitudinal traveling data in the process of the continuing to change lanes.

In some embodiments, the apparatus further includes:

a third starting time instant determining module 9871, configured to determine, if a duration of the straight-line traveling process is greater than or equal to preset traveling time and the following vehicle does not decelerate, a time instant when the preset traveling time expires, as a starting time instant of returning to an original lane;

a fifth transverse traveling data determining module 9872, configured to determine transverse traveling data at the starting time instant of the returning to an original lane;

a sixth transverse traveling data determining module 9873, configured to determine transverse traveling data at an ending time instant of the returning to an original lane;

a third transverse traveling data update module 9874, configured to determine transverse traveling data in an original lane return process according to the transverse traveling data at the starting time instant of the returning to an original lane, the transverse traveling data at the ending time instant of the returning to an original lane, and second preset returning time;

a third target preceding vehicle update module 9875, configured to update, from the preceding vehicle in the target lane and the preceding vehicle in the current lane, the target preceding vehicle in a time period from the starting time instant to the ending time instant of the returning to an original lane in real time, depending on whether the centroid of the target lane change vehicle crosses the lane line of the current lane in the time period from the starting time instant to the ending time instant of the returning to an original lane;

a third longitudinal traveling data update module 9876, configured to determine the longitudinal traveling data in the original lane return process according to a longitudinal speed of the target lane change vehicle, a longitudinal speed of the target preceding vehicle, and a distance between the target preceding vehicle and the target lane change vehicle in the time period from the starting time instant to the ending time instant of the returning to an original lane; and

a second original lane return trajectory construction module 9878, configured to construct a second original lane return trajectory of the target lane change vehicle in the lane change trajectory coordinate system based on the transverse traveling data and the longitudinal traveling data in the original lane return process.

In some embodiments, the apparatus further includes:

a traveling time determining module 9879, configured to determine traveling time of continuing traveling longitudinally from a transverse position in the transverse traveling data at the ending time instant of the straightening a vehicle head; and

a traveling trajectory construction module 9880, configured to construct a traveling trajectory of the target lane change vehicle in the lane change trajectory coordinate system based on the traveling time and the transverse traveling data and the longitudinal traveling data at the ending time instant of the straightening a vehicle head.

In some embodiments, the apparatus further includes: a recording module, configured to record, in a case that the preset lane change condition is not met and it is determined to continue to change lanes, a collision accident if the following vehicle does not decelerate.

The apparatus in the apparatus embodiment is based on the same concept as the method embodiments.

According to embodiments of the present invention, a device for constructing a simulated vehicle lane change trajectory is provided. The device includes a processor and a memory. The memory stores at least one instruction, at least one program, a code set, or an instruction set. The at least one instruction, the at least one program, the code set, or the instruction set is loaded and executed by the processor to perform the method for constructing a simulated vehicle lane change trajectory provided by the foregoing method embodiments.

The memory is configured to store a software program and module. The processor runs the software program and module stored in the memory, to implement various functional applications and data processing. The memory mainly includes a program storage area and a data storage area. The program storage area stores an operating system, an application required by a function, and the like. The data storage area stores data created according to use of the device, and the like. In addition, the memory includes a high-speed random access memory, and further includes a non-volatile memory, such as at least one magnetic disk storage device, a flash memory, or another volatile solid-state storage device. Correspondingly, the memory further includes a memory controller, so as to provide access of the processor to the memory.

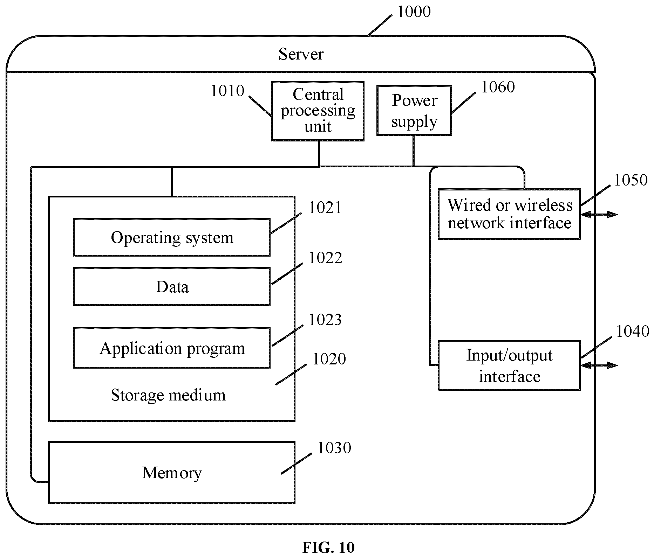

The method embodiment provided in the present invention may be executed in a mobile terminal, a computer terminal, a server, or a similar computing apparatus. FIG. 10 is a structural block diagram of a hardware of a server for performing a method for constructing a simulated vehicle lane change trajectory according to an embodiment of the present invention. As shown in FIG. 10, a server 1000 varies greatly due to different configurations or performance, and includes one or more central processing units (CPUs) 1010 (the CPUs 1010 include but are not limited to processing apparatuses such as microprocessors MCU or programmable logical devices FPGA), and a memory 1030 configured to store data, and one or more storage media 1020 (for example, one or more mass storage devices) storing an application 1023 or data 1022. The memory 1030 and the storage media 1020 may be transient storage or persistent storage. Programs stored in the storage media 1020 may include one or more modules, and each module may include series of instructions for the server. Furthermore, the CPUs 1010 is configured to be in communication with the storage media 1020 and to execute the series of instructions stored in the storage media 1020 on the server 1000. The server 1000 further includes one or more power supplies 1060, one or more wired or wireless network interfaces 1050, one or more input/output interfaces 1040, and/or one or more operating systems 1021, such as Windows Server™, Mac OS X™, Unix™, Uinux™, and FreeBSD™.

An input/output interface 1040 receives or transmits data through a network. A specific example of the foregoing network may include a wireless network provided by a communications provider of the server 1000. In an example, the input/output interface 1040 includes a network interface controller (NIC), which may be connected to another network device through a base station so as to communicate with the Internet. In an example, the input/output interface 1040 may be a radio frequency (RF) module, which is configured to communicate with the Internet in a wireless manner.

A person of ordinary skill in the art may understand that the structure shown in FIG. 10 is only for the purpose of illustration, and is not intended to limit the structure of the foregoing electronic device. For example, the server 1000 may include more or fewer components than those shown in FIG. 10, or have a configuration different from that shown in FIG. 10.

A storage medium is further provided according to an embodiment of the present invention. The storage medium may be configured to store at least one instruction, at least one program, a code set, or an instruction set which is related to the method for constructing a simulated vehicle lane change trajectory. The at least one instruction, the at least one program, the code set, or the instruction set are loaded and executed by a processor to perform the method for constructing a simulated vehicle lane change trajectory provided by the foregoing method embodiments.

In this embodiment, the foregoing storage medium may be located in at least one of multiple network servers in a computer network. In this embodiment, the storage medium may include, but is not limited to, a medium such as a USB flash drive, a read-only memory (ROM), a random access memory (RAM), a removable hard disk, a magnetic disk, or an optical disc.

It may be seen from the method and apparatus for constructing a simulated vehicle lane change trajectory, and the server or the storage medium provided in the present invention that, a lane change trajectory coordinate system is constructed; a traveling status in a lane change process is represented by transverse traveling data and longitudinal traveling data; for different statuses in the lane change process, different lane change trajectories are constructed with reference to the transverse traveling data and the longitudinal traveling data; and an original lane return trajectory is constructed when a lane change cannot be completed at one time because a following vehicle located behind the present vehicle in the target lane accelerates. In this way, the simulated trajectory can reflect the reality better, thereby providing effective decision-making support for practical application of automatic driving.

The sequence of the foregoing embodiments of the present invention is merely for description purpose and does not represent the preference among the embodiments. Specific embodiments of this specification are described above. Other embodiments fall within the scope of the appended claims. In some cases, the actions or steps recited in the claims may be performed in sequences different from those in the embodiments and an expected result can still be achieved. In addition, the processes depicted in the accompanying drawings are not necessarily performed in the specific order or successively to achieve an expected result. In some implementations, multitasking and parallel processing may be feasible or beneficial.

The embodiments of this specification are described in a progressive manner, for same or similar parts in the embodiments, one may refer to other embodiments, and descriptions of each embodiment focus on a difference from other embodiments. Especially, apparatus and server embodiments are basically similar to a method embodiment, and therefore are described briefly; and, for related parts, one may refer to related descriptions in the method embodiment.

A person of ordinary skill in the art may understand that all or some of the steps of the foregoing embodiments may be implemented by hardware, or may be implemented by a program instructing related hardware. The program may be stored in a computer-readable storage medium. The storage medium mentioned above may be: a read only memory, a magnetic disk, or an optical disc.

## Claims

1. A method for constructing a simulated vehicle lane change trajectory, executed by a target lane change vehicle, the method comprising:

   constructing (S201) a lane change trajectory coordinate system by using a position of the target lane change vehicle as an origin, using a center line of a current lane of the target lane change vehicle as an ordinate axis, and using a normal of the center line as an abscissa axis;
   determining (S203) a target preceding vehicle according to the position of the target lane change vehicle;
   determining (S205) target longitudinal traveling data of the target lane change vehicle in a lane change process according to a longitudinal speed of the target lane change vehicle, a longitudinal speed of the target preceding vehicle, and a distance between the target preceding vehicle and the target lane change vehicle at each time instant in the lane change process;
   determining (S209) target transverse traveling data of the target lane change vehicle in the lane change process according to preset initial transverse traveling data, preset end transverse traveling data, and preset lane change time in the lane change process;
   constructing (S211), in a case that a preset lane change condition is met, or in a case that the preset lane change condition is not met and it is determined to continue to change lanes, a first lane change trajectory of the target lane change vehicle in the lane change trajectory coordinate system based on the target transverse traveling data and the target longitudinal traveling data if a following vehicle in a target lane decelerates;
   updating (S213), in a case that the preset lane change condition is not met and it is determined to continue to change lanes, an acceleration in the target longitudinal traveling data if the following vehicle does not decelerate, to cause an updated longitudinal speed of the target lane change vehicle to be greater than a longitudinal speed of the following vehicle and less than a longitudinal speed of a preceding vehicle in the target lane; and constructing a second lane change trajectory of the target lane change vehicle in the lane change trajectory coordinate system based on the updated longitudinal traveling data and the target transverse traveling data; and
   updating (S215), in a case that the preset lane change condition is not met and it is determined not to continue to change lanes, transverse traveling data and longitudinal traveling data in an original lane return process, and constructing a first original lane return trajectory of the target lane change vehicle in the lane change trajectory coordinate system according to the transverse traveling data and the longitudinal traveling data in the original lane return process.

2. The method according to claim 1, wherein the determining a target preceding vehicle according to the position of the target lane change vehicle comprises:
   determining the target preceding vehicle from the preceding vehicle in the target lane and a preceding vehicle in the current lane depending on whether a centroid of the target lane change vehicle crosses a lane line of the current lane.

3. The method according to claim 1, wherein the updating transverse traveling data and longitudinal traveling data in an original lane return process comprises:

   determining transverse traveling data at a starting time instant of returning to an original lane when the preset lane change condition is not met;
   determining transverse traveling data at an ending time instant of the returning to an original lane;
   determining the transverse traveling data in the original lane return process according to the transverse traveling data at the starting time instant, the transverse traveling data at the ending time instant, and first preset return time;
   updating, from the preceding vehicle in the target lane and the preceding vehicle in the current lane, a target preceding vehicle in a time period from the starting time instant to the ending time instant in real time, depending on whether the centroid of the target lane change vehicle crosses the lane line of the current lane in the time period from the starting time instant to the ending time instant; and
determining the longitudinal traveling data in the original lane return process according to a longitudinal speed of the target lane change vehicle, a longitudinal speed of the target preceding vehicle, and a distance between the target preceding vehicle and the target lane change vehicle in the time period from the starting time instant to the ending time instant.

4. The method according to claim 1, wherein in a case that the preset lane change condition is not met, the method further comprises:

determining transverse traveling data at a starting time instant of straightening a vehicle head when the preset lane change condition is not met;
determining transverse traveling data at an ending time instant of the straightening the vehicle head;
determining transverse traveling data in a process of the straightening the vehicle head, according to the transverse traveling data at the starting time instant, the transverse traveling data at the ending time instant, and preset straightening time;
updating, from the preceding vehicle in the target lane and the preceding vehicle in the current lane, a target preceding vehicle at a time period from the starting time instant to the ending time instant in real time, depending on whether the centroid of the target lane change vehicle crosses the lane line of the current lane at the time period from the starting time instant to the ending time instant; and
determining longitudinal traveling data in the process of the straightening the vehicle head, according to a longitudinal speed of the target lane change vehicle, a longitudinal speed of the target preceding vehicle, and a distance between the target preceding vehicle and the target lane change vehicle at the time period from the starting time instant to the ending time instant; and
constructing a vehicle head straightening trajectory of the target lane change vehicle in the lane change trajectory coordinate system based on the transverse traveling data and the longitudinal traveling data in the process of the straightening the vehicle head.

5. The method according to claim 4, further comprising:

defining a process in which the target lane change vehicle continues traveling longitudinally from a transverse position in the transverse traveling data at the ending time instant of the straightening the vehicle head, as a straight-line traveling process;
using a time instant when the following vehicle decelerates in the straight-line traveling process as a starting time instant of continuing to change lanes;
determining transverse traveling data at the starting time instant of the continuing to change lanes;
determining transverse traveling data at an ending time instant of the continuing to change lanes;
determining transverse traveling data in a process of the continuing to change lanes, according to the transverse traveling data at the starting time instant of the continuing to change lanes, the transverse traveling data at the ending time instant of the continuing to change lanes, and preset time of the continuing to change lanes;
updating, from the preceding vehicle in the target lane and the preceding vehicle in the current lane, a target preceding vehicle in a time period from the starting time instant of the continuing to change lanes to the ending time instant of the continuing to change lanes in real time, depending on whether the centroid of the target lane change vehicle crosses the lane line of the current lane at the time period from the starting time instant of the continuing to change lanes to the ending time instant of the continuing to change lanes;
determining longitudinal traveling data in the process of the continuing to change lanes according to a longitudinal speed of the target lane change vehicle, a longitudinal speed of the target preceding vehicle, and a distance between the target preceding vehicle and the target lane change vehicle in the time period from the starting time instant of the continuing to change lanes to the ending time instant of the continuing to change lanes; and
constructing a third lane change trajectory of the target lane change vehicle in the lane change trajectory coordinate system based on the transverse traveling data and the longitudinal traveling data in the process of the continuing to change lanes.

6. The method according to claim 5, further comprising:

using, in a case that a duration of the straight-line traveling process is greater than or equal to a preset traveling time and the following vehicle does not decelerate, a time instant when the preset traveling time expires as a starting time instant of returning to an original lane;
determining transverse traveling data at the starting time instant of the returning to an original lane;

determining transverse traveling data at an ending time instant of the returning to an original lane;

determining the transverse traveling data in the original lane return process according to the transverse traveling data at the starting time instant of the returning to an original lane, the transverse traveling data at the ending time instant of the returning to an original lane, and second preset return time;

updating, from the preceding vehicle in the target lane and the preceding vehicle in the current lane, a target preceding vehicle at a time period from the starting time instant to the ending time instant of the returning to an original lane in real time, depending on whether the centroid of the target lane change vehicle crosses the lane line of the current lane at the time period from the starting time instant to the ending time instant of the returning to an original lane;

determining the longitudinal traveling data in the original lane return process according to a longitudinal speed of the target lane change vehicle, a longitudinal speed of the target preceding vehicle, and a distance between the target preceding vehicle and the target lane change vehicle in the time period from the starting time instant to the ending time instant of the returning to an original lane; and

constructing a second original lane return trajectory of the target lane change vehicle in the lane change trajectory coordinate system based on the transverse traveling data and the longitudinal traveling data in the original lane return process.

7. The method according to claim 4, further comprising:

determining traveling time of continuing traveling longitudinally from a transverse position in the transverse traveling data at the ending time instant of the straightening the vehicle head; and

constructing a traveling trajectory of the target lane change vehicle in the lane change trajectory coordinate system based on the traveling time and the transverse traveling data and the longitudinal traveling data at the ending time instant of the straightening the vehicle head.

8. The method according to claim 1, wherein in a case that the preset lane change condition is not met, it is determined to continue to change lanes, and if the following vehicle does not decelerate, the method further comprises: recording a collision accident.

9. An apparatus for constructing a simulated vehicle lane change trajectory, comprising:

a lane change trajectory coordinate system construction module (901), configured to construct a lane change trajectory coordinate system by using a position of a target lane change vehicle as an origin, using a center line of a current lane of the target lane change vehicle as an ordinate axis, and using a normal of the center line as an abscissa axis;

a target preceding vehicle determining module (902), configured to determine a target preceding vehicle according to the position of the target lane change vehicle;

a target longitudinal traveling data determining module (903), configured to determine target longitudinal traveling data of the target lane change vehicle in a lane change process according to a longitudinal speed of the target lane change vehicle, a longitudinal speed of the target preceding vehicle, and a distance between the target preceding vehicle and the target lane change vehicle at each time instant in the lane change process;

a target transverse traveling data determining module (904), configured to determine target transverse traveling data of the target lane change vehicle in the lane change process according to preset initial transverse traveling data, preset end transverse traveling data, and preset lane change time in the lane change process;

a first lane change trajectory construction module (905), configured to construct, in a case that a preset lane change condition is met, or in a case that the preset lane change condition is not met and it is determined to continue to change lanes, a first lane change trajectory of the target lane change vehicle in the lane change trajectory coordinate system based on the target transverse traveling data and the target longitudinal traveling data if a following vehicle in a target lane decelerates;

a second lane change trajectory construction module (906), configured to update, in a case that the preset lane change condition is not met and it is determined to continue to change lanes, an acceleration in the target longitudinal traveling data if the following vehicle does not decelerate, to cause an updated longitudinal speed of the target lane change vehicle to be greater than a longitudinal speed of the following vehicle and less than a longitudinal speed of a preceding vehicle in the target lane; and construct a second lane change trajectory of the target lane change vehicle in the lane change trajectory coordinate system based on the updated longitudinal traveling data and the target transverse traveling data; and

a first original lane return trajectory construction module (907), configured to update, in a case that the preset lane change condition is not met and it is determined not to continue to change lanes, transverse traveling data and longitudinal traveling data in an original lane return process, and construct a first original lane return trajectory of the target lane change vehicle in the lane change trajectory coordinate system according to the transverse traveling data and the longitudinal traveling data in the original lane return process.

10. The apparatus according to claim 9, wherein the target preceding vehicle determining module (902) is further configured to determine the target preceding vehicle from the preceding vehicle in the target lane and a preceding vehicle in the current lane depending on whether a centroid of the target lane change vehicle crosses a lane line of the current lane.

11. The apparatus according to claim 9, wherein the first original lane return trajectory construction module (907) is further configured to determine transverse traveling data at a starting time instant of returning to an original lane when the preset lane change condition is not met; determine transverse traveling data at an ending time instant of the returning to an original lane; determine the transverse traveling data in the original lane return process according to the transverse traveling data at the starting time instant, the transverse traveling data at the ending time instant, and first preset return time; update, from the preceding vehicle in the target lane and the preceding vehicle in the current lane, a target preceding vehicle in a time period from the starting time instant to the ending time instant in real time, depending on whether the centroid of the target lane change vehicle crosses the lane line of the current lane in the time period from the starting time instant to the ending time instant; and determine the longitudinal traveling data in the original lane return process according to a longitudinal speed of the target lane change vehicle, a longitudinal speed of the target preceding vehicle, and a distance between the target preceding vehicle and the target lane change vehicle in the time period from the starting time instant to the ending time instant.

12. The apparatus according to claim 9, wherein the apparatus further comprises: a first starting time instant determining module, configured to use a time instant when the preset lane change condition is not met as a starting time instant of straightening a vehicle head; a first transverse traveling data determining module, configured to determine transverse traveling data at the starting time instant; a second transverse traveling data determining module, configured to determine transverse traveling data at an ending time instant of the straightening the vehicle head; a first transverse traveling data update module, configured to determine traverse traveling data in a process of the straightening the vehicle head, according to the transverse traveling data at the starting time instant, the transverse traveling data at the ending time instant, and preset straightening time; a second target preceding vehicle update module, configured to update, from the preceding vehicle in the target lane and the preceding vehicle in the current lane, a target preceding vehicle at a time period from the starting time instant to the ending time instant in real time, depending on whether the centroid of the target lane change vehicle crosses the lane line of the current lane at the time period from the starting time instant to the ending time instant; a first longitudinal traveling data update module, configured to determine longitudinal traveling data in the process of straightening the vehicle head, according to a longitudinal speed of the target lane change vehicle, a longitudinal speed of the target preceding vehicle, and a distance between the target preceding vehicle and the target lane change vehicle at the time period from the starting time instant to the ending time instant; and a vehicle head straightening trajectory construction module, configured to construct a vehicle head straightening trajectory of the target lane change vehicle in the lane change trajectory coordinate system based on the transverse traveling data and the longitudinal traveling data in the process of the straightening the vehicle head.

13. A computer-readable storage medium, storing a computer program executable on a computer device, wherein the program, when run on the computer device, causes the computer device to perform the method for constructing a simulated vehicle lane change trajectory according to any one of claims 1 to 8.

**Patentansprüche**

1. Verfahren zum Erzeugen einer simulierten Fahrzeug-Spurwechsel-Trajektorie, die von einem Ziel-Spurwechsel-Fahrzeug ausgeführt wird, wobei das Verfahren umfasst:

Erstellen (S201) eines Spurwechsel-Koordinatensystems unter Verwendung einer Position des Ziel-Spurwechselfahrzeugs als Ursprung, unter Verwendung einer Mittellinie einer aktuellen Spur des Ziel-Spurwechselfahrzeugs als Ordinatenachse und Verwendung einer Normalen der Mittellinie als Abszissenachse;
Bestimmen (S203) eines vorausfahrenden Zielfahrzeugs entsprechend der Position des Ziel-Spurwechselfahrzeugs;
Bestimmen (S205) von Ziel-Längsfahrdaten des Ziel-Spurwechsel-Fahrzeugs in einem Spurwechselprozess gemäß einer Längsgeschwindigkeit des Ziel-Spurwechsel-Fahrzeugs, einer Längsgeschwindigkeit des vorausfahrenden Ziel-Fahrzeugs und einem Abstand zwischen dem vorausfahrenden Ziel-Fahrzeug und dem Ziel-Spurwechsel-Fahrzeug zu jedem Zeitpunkt in dem Spurwechselprozess;

Bestimmen (S209) von Ziel-Querfahrdaten des Ziel-Spurwechselfahrzeugs in dem Spurwechselprozess gemäß voreingestellten Anfangs-Querfahrdaten, voreingestellten End-Querfahrdaten und voreingestellter Spurwechselzeit in dem Spurwechselprozess;

Konstruieren (S211), in einem Fall, dass eine voreingestellte Spurwechselbedingung erfüllt ist, oder in einem Fall, dass die voreingestellte Spurwechselbedingung nicht erfüllt ist und bestimmt wird, mit dem Spurwechsel fortzufahren, einer ersten Spurwechseltrajektorie des Ziel-Spurwechselfahrzeugs in dem Spurwechseltrajektorien-Koordinatensystem auf der Grundlage der Ziel-Querfahrdaten und der Ziel-Längsfahrdaten, wenn ein nachfolgendes Fahrzeug in einer Zielspur abbremst;

Aktualisieren (S213) einer Beschleunigung in den Ziel-Längsfahrdaten in einem Fall, in dem die voreingestellte Spurwechselbedingung nicht erfüllt ist und bestimmt wird, mit dem Spurwechsel fortzufahren, wenn das nachfolgende Fahrzeug nicht abbremst, um zu bewirken, dass eine aktualisierte Längsgeschwindigkeit des Ziel-Spurwechselfahrzeugs größer als eine Längsgeschwindigkeit des nachfolgenden Fahrzeugs und kleiner als eine Längsgeschwindigkeit eines vorausfahrenden Fahrzeugs in der Zielspur ist; und Konstruieren einer zweiten Spurwechsel-Trajektorie des Ziel-Spurwechsel-Fahrzeugs in dem Spurwechsel-Trajektorie-Koordinatensystem auf der Grundlage der aktualisierten Längsfahrdaten und der Ziel-Querfahrdaten; und

Aktualisieren (S215), in einem Fall, dass die voreingestellte Spurwechselbedingung nicht erfüllt ist und bestimmt wird, den Spurwechsel nicht fortzusetzen, von Querfahrdaten und Längsfahrdaten in einem ursprünglichen Spurrückkehrprozess, und Konstruieren einer ersten ursprünglichen Spurrückkehrtrajektorie des Zielspurwechselfahrzeugs in dem Spurwechseltrajektorien-Koordinatensystem gemäß den Querfahrdaten und den Längsfahrdaten in dem ursprünglichen Spurrückkehrprozess.

2. Verfahren nach Anspruch 1, wobei das Bestimmen eines vorausfahrenden Zielfahrzeugs gemäß der Position des Ziel-Spurwechselfahrzeugs Folgendes umfasst:
Bestimmen des vorausfahrenden Zielfahrzeugs aus dem vorausfahrenden Fahrzeug auf der Zielspur und einem vorausfahrenden Fahrzeug auf der aktuellen Spur in Abhängigkeit davon, ob ein Schwerpunkt des Zielspurwechselfahrzeugs eine Spurlinie der aktuellen Spur kreuzt.

3. Verfahren nach Anspruch 1, wobei das Aktualisieren von Querfahrdaten und Längsfahrdaten in einem ursprünglichen Fahrspur-Rückkehrprozess umfasst:

Bestimmen von Querfahrdaten zu einem Anfangszeitpunkt der Rückkehr zu einer ursprünglichen Fahrspur, wenn die voreingestellte Fahrspurwechselbedingung nicht erfüllt ist;
Bestimmen von Querfahrdaten zu einem Endzeitpunkt der Rückkehr zu einer ursprünglichen Fahrspur;
Bestimmen der Querbewegungsdaten in dem ursprünglichen Spurrückkehrprozess gemäß den Querbewegungsdaten zu dem Startzeitpunkt, den Querbewegungsdaten zu dem Endzeitpunkt und der ersten voreingestellten Rückkehrzeit;
Aktualisieren eines vorausfahrenden Zielfahrzeugs aus dem vorausfahrenden Fahrzeug in der Zielspur und dem vorausfahrenden Fahrzeug in der aktuellen Spur in einer Zeitperiode von dem Startzeitpunkt bis zu dem Endzeitpunkt in Echtzeit, abhängig davon, ob der Schwerpunkt des Zielspurwechselfahrzeugs die Spurlinie der aktuellen Spur in der Zeitperiode von dem Startzeitpunkt bis zu dem Endzeitpunkt kreuzt; und
Bestimmen der longitudinalen Fahrdaten in dem ursprünglichen Spurrückkehrprozess gemäß einer longitudinalen Geschwindigkeit des Zielspurwechselfahrzeugs, einer longitudinalen Geschwindigkeit des vorausfahrenden Zielfahrzeugs und einem Abstand zwischen dem vorausfahrenden Zielfahrzeug und dem Zielspurwechselfahrzeug in der Zeitperiode von dem Startzeitpunkt bis zu dem Endzeitpunkt.

4. Verfahren nach Anspruch 1, wobei in einem Fall, in dem die voreingestellte Spurwechselbedingung nicht erfüllt ist, das Verfahren ferner umfasst:

Bestimmen von Querfahrdaten zu einem Anfangszeitpunkt des Aufrichtens eines Fahrzeugkopfes, wenn die voreingestellte Spurwechselbedingung nicht erfüllt ist;
Bestimmen von Querfahrdaten zu einem Endzeitpunkt des Ausrichtens des Fahrzeugkopfes;
Bestimmen von Querbewegungsdaten in einem Prozess des Ausrichtens des Fahrzeugkopfes gemäß den Querbewegungsdaten zu dem Startzeitpunkt, den Querbewegungsdaten zu dem Endzeitpunkt und der voreingestellten Ausrichtzeit;
Aktualisieren eines vorausfahrenden Zielfahrzeugs von dem vorausfahrenden Fahrzeug in der Zielspur und dem vorausfahrenden Fahrzeug in der aktuellen Spur in einer Zeitperiode von dem Startzeitpunkt bis zu dem Endzeitpunkt in Echtzeit, abhängig davon, ob der Schwerpunkt des Zielspurwechselfahrzeugs die Spurlinie der aktuellen Spur in der Zeitperiode von dem Startzeitpunkt bis zu dem Endzeitpunkt kreuzt; und

Bestimmen von Längsbewegungsdaten in dem Prozess des Ausrichtens des Fahrzeugkopfes gemäß einer Längsgeschwindigkeit des Ziel-Spurwechsel-Fahrzeugs, einer Längsgeschwindigkeit des vorausfahrenden Ziel-Fahrzeugs und einem Abstand zwischen dem vorausfahrenden Ziel-Fahrzeug und dem Ziel-Spurwechsel-Fahrzeug in dem Zeitraum von dem Startzeitpunkt bis zu dem Endzeitpunkt; und

Konstruieren einer Fahrzeugkopf-Ausrichttrajektorie des Ziel-Spurwechsel-Fahrzeugs in dem Spurwechsel-Trajektorien-Koordinatensystem auf der Grundlage der Querbewegungsdaten und der Längsbewegungsdaten in dem Prozess des Ausrichtens des Fahrzeugkopfs.

5. Das Verfahren nach Anspruch 4 umfasst ferner:

Definieren eines Prozesses, bei dem das Zielfahrzeug für den Fahrspurwechsel von einer Querposition in den Querfahrdaten zum Endzeitpunkt des Aufrichtens des Fahrzeugkopfes in Längsrichtung weiterfährt, als geradliniger Fahrprozess;

die Verwendung eines Zeitpunkts, zu dem das nachfolgende Fahrzeug bei der Geradeausfahrt abbremst, als Startzeitpunkt für den weiteren Spurwechsel;

Bestimmung von Querbewegungsdaten zum Anfangszeitpunkt des fortgesetzten Spurwechsels;

Bestimmung von Querbewegungsdaten zu einem Endzeitpunkt des fortgesetzten Fahrspurwechsels;

Bestimmung von Querbewegungsdaten in einem Prozess des fortgesetzten Fahrspurwechsels, gemäß den Querfahrdaten zum Anfangszeitpunkt des fortgesetzten Spurwechsels, den Querfahrdaten zum Endzeitpunkt des fortgesetzten Spurwechsels und der voreingestellten Zeit des fortgesetzten Spurwechsels;

Aktualisieren eines vorausfahrenden Zielfahrzeugs aus dem vorausfahrenden Fahrzeug in der Zielspur und dem vorausfahrenden Fahrzeug in der aktuellen Spur in einer Zeitspanne vom Startzeitpunkt des fortgesetzten Spurwechsels bis zum Endzeitpunkt des fortgesetzten Spurwechsels in Echtzeit, abhängig davon, ob der Schwerpunkt des Zielfahrzeugs für den Spurwechsel die Spurlinie der aktuellen Spur in der Zeitspanne vom Startzeitpunkt des fortgesetzten Spurwechsels bis zum Endzeitpunkt des fortgesetzten Spurwechsels kreuzt;

Bestimmen von Längsbewegungsdaten im Prozess des fortgesetzten Spurwechsels gemäß einer Längsgeschwindigkeit des Ziel-Spurwechsel-Fahrzeugs, einer Längsgeschwindigkeit des vorausfahrenden Ziel-Fahrzeugs und eines Abstands zwischen dem vorausfahrenden Ziel-Fahrzeug und dem Ziel-Spurwechsel-Fahrzeug in der Zeitspanne von dem Anfangszeitpunkt des fortgesetzten Spurwechsels bis zu dem Endzeitpunkt des fortgesetzten Spurwechsels; und

Konstruieren einer dritten Spurwechseltrajektorie des Zielfahrzeugs in dem Spurwechseltrajektorien-Koordinatensystem auf der Grundlage der Querfahrdaten und der Längsfahrdaten im Prozess des fortgesetzten Spurwechsels.

6. Das Verfahren nach Anspruch 5 umfasst ferner:

in einem Fall, in dem die Dauer des geradlinigen Fahrvorgangs größer oder gleich einer voreingestellten Fahrzeit ist und das nachfolgende Fahrzeug nicht abbremst, einen Zeitpunkt, zu dem die voreingestellte Fahrzeit abläuft, als Startzeitpunkt für die Rückkehr zu einer ursprünglichen Fahrspur verwendet;

Bestimmung der Querbewegungsdaten zum Zeitpunkt des Beginns der Rückkehr zu einer ursprünglichen Fahrspur;

Bestimmung von Querbewegungsdaten zu einem Endzeitpunkt der Rückkehr zu einer ursprünglichen Fahrspur;

Bestimmen der Querbewegungsdaten im ursprünglichen Spurrückkehrprozess gemäß den Querbewegungsdaten zum Anfangszeitpunkt der Rückkehr zu einer ursprünglichen Spur, den Querbewegungsdaten zum Endzeitpunkt der Rückkehr zu einer ursprünglichen Spur und einer zweiten voreingestellten Rückkehrzeit;

Aktualisieren eines vorausfahrenden Zielfahrzeugs aus dem vorausfahrenden Fahrzeug in der Zielspur und dem vorausfahrenden Fahrzeug in der aktuellen Spur in einer Zeitspanne vom Startzeitpunkt bis zum Endzeitpunkt der Rückkehr zu einer ursprünglichen Spur in Echtzeit, je nachdem, ob der Schwerpunkt des Zielspurwechselfahrzeugs die Spurlinie der aktuellen Spur in der Zeitspanne vom Startzeitpunkt bis zum Endzeitpunkt der Rückkehr zu einer ursprünglichen Spur kreuzt;

Bestimmen der Längsbewegungsdaten in dem ursprünglichen Spurrückkehrprozess gemäß einer Längsgeschwindigkeit des Zielspurwechselfahrzeugs, einer Längsgeschwindigkeit des vorausfahrenden Zielfahrzeugs und einer Entfernung zwischen dem vorausfahrenden Zielfahrzeug und dem Zielspurwechselfahrzeug in der Zeitperiode von dem Anfangszeitpunkt bis zu dem Endzeitpunkt der Rückkehr zu einer ursprünglichen Spur; und

Konstruieren einer zweiten ursprünglichen Spurwechsel-Trajektorie des Zielfahrzeugs im Spurwechsel-Trajektorien-Koordinatensystem auf der Grundlage der Querfahrdaten und der Längsfahrdaten im ursprünglichen Spurwechselprozess.

7. Das Verfahren nach Anspruch 4 umfasst ferner:

   Bestimmen der Fahrzeit des Weiterfahrens in Längsrichtung von einer Querposition in den Querfahrdaten zum Endzeitpunkt des Aufrichtens des Fahrzeugkopfes; und
   Konstruieren einer Fahrtrajektorie des Zielfahrzeugs für den Spurwechsel im Spurwechsel-Koordinatensystem auf der Grundlage der Fahrzeit, der Querfahrdaten und der Längsfahrdaten zum Zeitpunkt der Beendigung des Aufrichtens des Fahrzeugkopfes.

8. Verfahren nach Anspruch 1, wobei in einem Fall, in dem die voreingestellte Spurwechselbedingung nicht erfüllt ist, bestimmt wird, den Spurwechsel fortzusetzen, und wenn das nachfolgende Fahrzeug nicht abbremst, das Verfahren ferner umfasst:
   Aufnahme eines Kollisionsunfalls.

9. Vorrichtung zur Konstruktion einer simulierten Fahrzeug-Spurwechselkurve, die Folgendes umfasst:

   ein Spurwechsel-Koordinatensystem-Konstruktionsmodul (901), das so konfiguriert ist, dass es ein Spurwechsel-Koordinatensystem konstruiert, indem es eine Position eines Ziel-Spurwechsel-Fahrzeugs als Ursprung verwendet, eine Mittellinie einer aktuellen Spur des Ziel-Spurwechsel-Fahrzeugs als Ordinatenachse verwendet und eine Normale der Mittellinie als Abszissenachse verwendet;
   ein Modul (902) zur Bestimmung des vorausfahrenden Zielfahrzeugs, das so konfiguriert ist, dass es ein vorausfahrendes Zielfahrzeug entsprechend der Position des Zielfahrzeugs für den Spurwechsel bestimmt;
   ein Ziel-Längsfahrdaten-Bestimmungsmodul (903), das konfiguriert ist, um Ziel-Längsfahrdaten des Ziel-Spurwechselfahrzeugs in einem Spurwechselprozess gemäß einer Längsgeschwindigkeit des Ziel-Spurwechselfahrzeugs, einer Längsgeschwindigkeit des vorausfahrenden Zielfahrzeugs und einem Abstand zwischen dem vorausfahrenden Zielfahrzeug und dem Ziel-Spurwechselfahrzeug zu jedem Zeitpunkt in dem Spurwechselprozess zu bestimmen;
   ein Ziel-Querfahrdaten-Bestimmungsmodul (904), das konfiguriert ist, um Ziel-Querfahrdaten des Ziel-Spurwechselfahrzeugs in dem Spurwechselprozess gemäß voreingestellten Anfangs-Querfahrdaten, voreingestellten End-Querfahrdaten und voreingestellter Spurwechselzeit in dem Spurwechselprozess zu bestimmen;
   ein erstes Spurwechsel-Trajektorien-Konstruktionsmodul (905), das so konfiguriert ist, dass es in einem Fall, in dem eine voreingestellte Spurwechselbedingung erfüllt ist, oder in einem Fall, in dem die voreingestellte Spurwechselbedingung nicht erfüllt ist und bestimmt wird, mit dem Spurwechsel fortzufahren, eine erste Spurwechsel-Trajektorie des Ziel-Spurwechsel-Fahrzeugs in dem Spurwechsel-Trajektorien-Koordinatensystem auf der Grundlage der Ziel-Querfahrdaten und der Ziel-Längsfahrdaten konstruiert, wenn ein 10 nachfolgendes Fahrzeug in einer Ziel-Spur abbremst;
   ein zweites Spurwechsel-Trajektorien-Konstruktionsmodul (906), das so konfiguriert ist, dass es in einem Fall, in dem die voreingestellte Spurwechselbedingung nicht erfüllt ist und bestimmt wird, mit dem Spurwechsel fortzufahren, eine Beschleunigung in den Ziel-Längsfahrdaten aktualisiert, wenn das nachfolgende Fahrzeug nicht abbremst, um zu bewirken, dass eine aktualisierte Längsgeschwindigkeit des Ziel-Spurwechsel-Fahrzeugs größer als eine Längsgeschwindigkeit des nachfolgenden Fahrzeugs und kleiner als eine Längsgeschwindigkeit eines vorausfahrenden Fahrzeugs in der Zielspur ist; und Konstruieren einer zweiten Spurwechsel-Trajektorie des Ziel-Spurwechsel-Fahrzeugs in dem Spurwechsel-Trajektorie-Koordinatensystem auf der Grundlage der aktualisierten Längsfahrdaten und der Ziel-Querfahrdaten; und
   ein erstes Modul (907) zur Konstruktion einer ursprünglichen Spurrückkehrtrajektorie, das so konfiguriert ist, dass es in einem Fall, in dem die voreingestellte Spurwechselbedingung nicht erfüllt ist und bestimmt wird, den Spurwechsel nicht fortzusetzen, Querfahrdaten und Längsfahrdaten in einem ursprünglichen Spurrückkehrprozess aktualisiert und eine erste ursprüngliche Spurrückkehrtrajektorie des Ziel-Spurwechselfahrzeugs in dem Spurwechseltrajektorien-Koordinatensystem gemäß den Querfahrdaten und den Längsfahrdaten in dem ursprünglichen Spurrückkehrprozess konstruiert.

10. Vorrichtung nach Anspruch 9, wobei das Modul (902) zum Bestimmen des vorausfahrenden Zielfahrzeugs weiterhin konfiguriert ist, um das vorausfahrende Zielfahrzeug aus dem vorausfahrenden Fahrzeug in der Zielspur und einem vorausfahrenden Fahrzeug in der aktuellen Spur zu bestimmen, abhängig davon, ob ein Schwerpunkt des Zielspurwechselfahrzeugs eine Spurlinie der aktuellen Spur kreuzt.

**11.** Vorrichtung nach Anspruch 9, wobei das erste Trajektorienkonstruktionsmodul (907) für die ursprüngliche Fahrspurrückkehr ferner so konfiguriert ist, dass es Querfahrdaten zu einem Startzeitpunkt der Rückkehr zu einer ursprünglichen Fahrspur bestimmt, wenn die voreingestellte Fahrspurwechselbedingung nicht erfüllt ist; Querfahrdaten zu einem Endzeitpunkt der Rückkehr zu einer ursprünglichen Fahrspur bestimmt; die Querfahrdaten im ursprünglichen Fahrspurrückkehrprozess gemäß den Querfahrdaten zum Startzeitpunkt, den Querfahrdaten zum Endzeitpunkt und der ersten voreingestellten Rückkehrzeit bestimmt; Aktualisieren eines vorausfahrenden Zielfahrzeugs aus dem vorausfahrenden Fahrzeug in der Zielspur und dem vorausfahrenden Fahrzeug in der aktuellen Spur in einer Zeitperiode von dem Startzeitpunkt bis zu dem Endzeitpunkt in Echtzeit, abhängig davon, ob der Schwerpunkt des Zielspurwechselfahrzeugs die Spurlinie der aktuellen Spur in der Zeitperiode von dem Startzeitpunkt bis zu dem Endzeitpunkt kreuzt und Bestimmen der Längsbewegungsdaten in dem ursprünglichen Spurrückkehrprozess gemäß einer Längsgeschwindigkeit des Zielspurwechselfahrzeugs, einer Längsgeschwindigkeit des vorausfahrenden Zielfahrzeugs und einem Abstand zwischen dem vorausfahrenden Zielfahrzeug und dem Zielspurwechselfahrzeug in der Zeitperiode von dem Startzeitpunkt bis zu dem Endzeitpunkt.

**12.** Vorrichtung nach Anspruch 9, wobei die Vorrichtung ferner umfasst:
ein erstes Modul zur Bestimmung des Anfangszeitpunkts, das so konfiguriert ist, dass es einen Zeitpunkt, zu dem die voreingestellte Spurwechselbedingung nicht erfüllt ist, als Anfangszeitpunkt für das Geraderichten eines Fahrzeugkopfes verwendet; ein erstes Modul zur Bestimmung von Querfahrdaten, das so konfiguriert ist, dass es Querfahrdaten zu dem Anfangszeitpunkt bestimmt; ein zweites Modul zum Bestimmen von Querbewegungsdaten, das so konfiguriert ist, dass es Querbewegungsdaten zu einem Endzeitpunkt der Begradigung des Fahrzeugkopfes bestimmt; ein erstes Modul zum Aktualisieren von Querbewegungsdaten, das so konfiguriert ist, dass es Querbewegungsdaten in einem Prozess der Begradigung des Fahrzeugkopfes gemäß den Querbewegungsdaten zu dem Startzeitpunkt, den Querbewegungsdaten zu dem Endzeitpunkt und der voreingestellten Begradigungszeit bestimmt; ein zweites Aktualisierungsmodul für ein vorausfahrendes Zielfahrzeug, das so konfiguriert ist, dass es von dem vorausfahrenden Fahrzeug in der Zielspur und dem vorausfahrenden Fahrzeug in der aktuellen Spur ein vorausfahrendes Zielfahrzeug in einer Zeitspanne von dem Startzeitpunkt bis zu dem Endzeitpunkt in Echtzeit aktualisiert, je nachdem, ob der Schwerpunkt des Zielspurwechselfahrzeugs die Spurlinie der aktuellen Spur in der Zeitspanne von dem Startzeitpunkt bis zu dem Endzeitpunkt kreuzt ein erstes Längsbewegungsdaten-Aktualisierungsmodul, das konfiguriert ist, um Längsbewegungsdaten in dem Prozess des Ausrichtens des Fahrzeugkopfes gemäß einer Längsgeschwindigkeit des Ziel-Spurwechsel-Fahrzeugs, einer Längsgeschwindigkeit des vorausfahrenden Ziel-Fahrzeugs und einem Abstand zwischen dem vorausfahrenden Ziel-Fahrzeug und dem Ziel-Spurwechsel-Fahrzeug in dem Zeitraum von dem Startzeitpunkt bis zu dem Endzeitpunkt zu bestimmen; und ein Fahrzeugkopfbegradigungstrajektorien-Konstruktionsmodul, das konfiguriert ist, um eine Fahrzeugkopfbegradigungstrajektorie des Ziel-Spurwechselfahrzeugs in dem Spurwechsel-Trajektorien-Koordinatensystem auf der Grundlage der Querbewegungsdaten und der Längsbewegungsdaten in dem Prozess der Begradigung des Fahrzeugkopfes zu konstruieren.

**13.** Computerlesbares Speichermedium, das ein Computerprogramm speichert, das auf einer Computervorrichtung ausführbar ist, wobei das Programm, wenn es auf der Computervorrichtung ausgeführt wird, die Computervorrichtung veranlasst, das Verfahren zum Konstruieren einer simulierten Fahrzeugspurwechselkurve nach einem der Ansprüche 1 bis 8 durchzuführen.

**Revendications**

**1.** Procédé de construction d'une trajectoire simulée de changement de voie de véhicule, exécuté par un véhicule cible de changement de voie, le procédé comprenant :

la construction (S201) d'un système de coordonnées de trajectoire de changement de voie en utilisant une position du véhicule cible de changement de voie comme origine, en utilisant une ligne centrale d'une voie courante du véhicule cible de changement de voie comme axe des ordonnées, et en utilisant une normale de la ligne centrale comme axe des abscisses ;
la détermination (S203) d'un véhicule précédant la cible en fonction de la position du véhicule cible de changement de voie ;
la détermination (S205) de données de déplacement longitudinal cible du véhicule cible de changement de voie lors d'un processus de changement de voie selon une vitesse longitudinale du véhicule cible de changement de voie, une vitesse longitudinale du véhicule précédant la cible, et une distance entre le véhicule précédant la cible et le véhicule cible de changement de voie à chaque instant au cours du processus de changement de voie ;

la détermination (S209) de données de déplacement transversal cible du véhicule cible de changement de voie lors du processus de changement de voie selon des données initiales de déplacement transversal prédéfinies, des données finales de déplacement transversal prédéfinies et une durée de changement de voie prédéfinie au cours du processus de changement de voie ;

la construction (S211), dans un cas où une condition de changement de voie prédéfinie est satisfaite, ou dans un cas où la condition de changement de voie prédéfinie n'est pas satisfaite et il est déterminé qu'il convient de poursuivre le changement de voie, d'une première trajectoire de changement de voie du véhicule cible de changement de voie dans le système de coordonnées de trajectoire de changement de voie sur la base des données de déplacement transversal cible et des données de déplacement longitudinal cible si un véhicule suivant dans une voie cible ralentit ;

la mise à jour (S213), dans un cas où la condition de changement de voie prédéfinie n'est pas satisfaite et il est déterminé qu'il convient de poursuivre le changement de voie, d'une accélération dans les données de déplacement longitudinal cible si le véhicule suivant ne ralentit pas, de sorte qu'une vitesse longitudinale mise à jour du véhicule cible de changement de voie soit supérieure à une vitesse longitudinale du véhicule suivant et inférieure à une vitesse longitudinale d'un véhicule précédant dans la voie cible ; et la construction d'une deuxième trajectoire de changement de voie du véhicule cible de changement de voie dans le système de coordonnées de trajectoire de changement de voie sur la base des données de déplacement longitudinal mises à jour et des données de déplacement transversal cible ; et

la mise à jour (S215), dans un cas où la condition de changement de voie prédéfinie n'est pas satisfaite et il est déterminé qu'il convient de ne pas poursuivre le changement de voie, de données de déplacement transversal et de données de déplacement longitudinal lors d'un processus de retour à une voie d'origine, et la construction d'une première trajectoire de retour à une voie d'origine du véhicule cible de changement de voie dans le système de coordonnées de trajectoire de changement de voie à partir des données de déplacement transversal et des données de déplacement longitudinal au cours du processus de retour à une voie d'origine.

2. Procédé selon la revendication 1, dans lequel la détermination d'un véhicule précédant la cible en fonction de la position du véhicule cible de changement de voie comprend :
la détermination du véhicule précédant la cible à partir du véhicule précédant dans la voie cible et d'un véhicule précédant dans la voie courante en fonction du fait qu'un centroïde du véhicule cible de changement de voie franchit ou non une ligne de voie de la voie courante.

3. Procédé selon la revendication 1, dans lequel la mise à jour des données de déplacement transversal et des données de déplacement longitudinal lors d'un processus de retour à une voie d'origine comprend :

la détermination de données de déplacement transversal à un instant de début de retour à une voie d'origine lorsque la condition de changement de voie prédéfinie n'est pas satisfaite ;
la détermination de données de déplacement transversal à un instant de fin du retour à une voie d'origine ;
la détermination des données de déplacement transversal lors du processus de retour à une voie d'origine en fonction des données de déplacement transversal à l'instant de début, des données de déplacement transversal à l'instant de fin, et d'une première durée de retour prédéfinie ;
la mise à jour, à partir du véhicule précédant dans la voie cible et du véhicule précédant dans la voie courante, d'un véhicule précédant la cible pendant une période s'étendant de l'instant de début à l'instant de fin en temps réel, en fonction du fait que le centroïde du véhicule cible de changement de voie franchit ou non la ligne de voie de la voie courante pendant la période s'étendant de l'instant de début à l'instant de fin ; et
la détermination des données de déplacement longitudinal lors du processus de retour à une voie d'origine en fonction d'une vitesse longitudinale du véhicule cible de changement de voie, d'une vitesse longitudinale du véhicule précédant la cible, et d'une distance entre le véhicule précédant la cible et le véhicule cible de changement de voie pendant la période s'étendant de l'instant de début à l'instant de fin.

4. Procédé selon la revendication 1, dans lequel dans un cas où la condition de changement de voie prédéfinie n'est pas satisfaite, le procédé comprend en outre :

la détermination de données de déplacement transversal à un instant de départ de redressement d'une partie avant de véhicule lorsque la condition de changement de voie prédéfinie n'est pas satisfaite ;
la détermination de données de déplacement transversal à un instant d'arrêt du redressement de la partie avant de véhicule ;
la détermination de données de déplacement transversal lors d'un processus du redressement de la partie avant de véhicule, en fonction des données de déplacement transversal à l'instant de départ, des données de déplacement transversal à l'instant d'arrêt, et d'une durée de redressement prédéfinie ;

la mise à jour, à partir du véhicule précédant dans la voie cible et du véhicule précédant dans la voie courante, d'un véhicule précédant la cible lors d'une période s'étendant de l'instant de départ à l'instant d'arrêt en temps réel, en fonction du fait que le centroïde du véhicule cible de changement de voie franchit ou non la ligne de voie de la voie courante au cours de la période s'étendant de l'instant de départ à l'instant d'arrêt ; et

la détermination de données de déplacement longitudinal lors du processus du redressement de la partie avant de véhicule, en fonction d'une vitesse longitudinale du véhicule cible de changement de voie, d'une vitesse longitudinale du véhicule précédant la cible, et d'une distance entre le véhicule précédant la cible et le véhicule cible de changement de voie au cours de la période s'étendant de l'instant de départ à l'instant d'arrêt ; et

la construction d'une trajectoire de redressement de partie avant de véhicule du véhicule cible de changement de voie dans le système de coordonnées de trajectoire de changement de voie sur la base des données de déplacement transversal et des données de déplacement longitudinal au cours du processus du redressement de la partie avant de véhicule.

**5.** Procédé selon la revendication 4, comprenant en outre :

la définition d'un processus dans lequel le véhicule cible de changement de voie continue de se déplacer longitudinalement à partir d'une position transversale dans les données de déplacement transversal à l'instant d'arrêt du redressement de la partie avant de véhicule, en tant que processus de déplacement en ligne droite ;

l'utilisation d'un instant où le véhicule suivant ralentit au cours du processus de déplacement en ligne droite en tant qu'instant de début de la poursuite de changement de voie ;

la détermination de données de déplacement transversal à l'instant de début de la poursuite de changement de voie ;

la détermination de données de déplacement transversal à un instant de fin de la poursuite de changement de voie ;

la détermination de données de déplacement transversal au cours d'un processus de la poursuite de changement de voie, en fonction des données de déplacement transversal à l'instant de début de la poursuite de changement de voie, des données de déplacement transversal à l'instant de fin de la poursuite de changement de voie, et d'une durée prédéfinie de la poursuite de changement de voie ;

la mise à jour, à partir du véhicule précédant dans la voie cible et du véhicule précédant dans la voie courante, d'un véhicule précédant la cible pendant une période s'étendant de l'instant de début de la poursuite de changement de voie à l'instant de fin de la poursuite de changement de voie en temps réel, en fonction du fait que le centroïde du véhicule cible de changement de voie franchit ou non la ligne de voie de la voie courante au cours de la période s'étendant de l'instant de début de la poursuite de changement de voie à l'instant de fin de la poursuite de changement de voie ;

la détermination de données de déplacement longitudinal au cours du processus de la poursuite de changement de voie en fonction d'une vitesse longitudinale du véhicule cible de changement de voie, d'une vitesse longitudinale du véhicule précédant la cible, et d'une distance entre le véhicule précédant la cible et le véhicule cible de changement de voie au cours de la période s'étendant de l'instant de début de la poursuite de changement de voie à l'instant de fin de la poursuite de changement de voie ; et

la construction d'une troisième trajectoire de changement de voie du véhicule cible de changement de voie dans le système de coordonnées de trajectoire de changement de voie sur la base des données de déplacement transversal et des données de déplacement longitudinal au cours du processus de la poursuite de changement de voie.

**6.** Procédé selon la revendication 5, comprenant en outre :

l'utilisation, dans un cas où une durée du processus de déplacement en ligne droite est supérieure ou égale à une durée de déplacement prédéfinie et le véhicule suivant ne ralentit pas, d'un instant où la durée de déplacement prédéfinie arrive à expiration en tant qu'instant de début de retour à une voie d'origine ;

la détermination de données de déplacement transversal à l'instant de début du retour à une voie d'origine ;

la détermination de données de déplacement transversal à un instant de fin du retour à une voie d'origine ;

la détermination des données de déplacement transversal au cours du processus de retour à une voie d'origine en fonction des données de déplacement transversal à l'instant de début du retour à une voie d'origine, des données de déplacement transversal à l'instant de fin du retour à une voie d'origine, et d'un deuxième temps de retour prédéfini ;

la mise à jour, à partir du véhicule précédant dans la voie cible et du véhicule précédant dans la voie courante, d'un véhicule précédant la cible lors d'une période s'étendant de l'instant de début à l'instant de fin du retour à une voie d'origine en temps réel, en fonction du fait que le centroïde du véhicule cible de changement de voie franchit ou non la ligne de voie de la voie courante au cours de la période s'étendant de l'instant de début à l'instant de fin du retour à une voie d'origine ;

la détermination des données de déplacement longitudinal au cours du processus de retour à une voie d'origine en fonction d'une vitesse longitudinale du véhicule cible de changement de voie, d'une vitesse longitudinale du véhicule précédant la cible, et d'une distance entre le véhicule précédant la cible et le véhicule cible de changement de voie au cours de la période s'étendant de l'instant de début à l'instant de fin du retour à une voie d'origine ; et

la construction d'une deuxième trajectoire de retour à une voie d'origine du véhicule cible de changement de voie dans le système de coordonnées de trajectoire de changement de voie sur la base des données de déplacement transversal et des données de déplacement longitudinal au cours du processus de retour à une voie d'origine.

7.  Procédé selon la revendication 4, comprenant en outre :

la détermination d'une durée de déplacement de poursuite de déplacement longitudinal à partir d'une position transversale dans les données de déplacement transversal à l'instant d'arrêt du redressement de la partie avant de véhicule ; et

la construction d'une trajectoire de déplacement du véhicule cible de changement de voie dans le système de coordonnées de trajectoire de changement de voie sur la base de la durée de déplacement et des données de déplacement transversal et des données de déplacement longitudinal à l'instant d'arrêt du redressement de la partie avant de véhicule.

8.  Procédé selon la revendication 1, dans lequel dans un cas où la condition de changement de voie prédéfinie n'est pas satisfaite, il est déterminé qu'il convient de poursuivre le changement de voie, et si le véhicule suivant ne ralentit pas, le procédé comprend en outre :
l'enregistrement d'un accident de collision.

9.  Appareil de construction d'une trajectoire simulée de changement de voie de véhicule, comprenant :

un module de construction de système de coordonnées de trajectoire de changement de voie (901), configuré pour construire un système de coordonnées de trajectoire de changement de voie en utilisant une position d'un véhicule cible de changement de voie en tant qu'origine, en utilisant une ligne centrale d'une voie courante du véhicule cible de changement de voie en tant qu'axe des ordonnées, et en utilisant une normale de la ligne centrale en tant qu'axe des abscisses ;

un module de détermination de véhicule précédant la cible (902), configuré pour déterminer un véhicule précédant la cible en fonction de la position du véhicule cible de changement de voie ;

un module de détermination de données de déplacement longitudinal cible (903), configuré pour déterminer des données de déplacement longitudinal cible du véhicule cible de changement de voie au cours d'un processus de changement de voie selon une vitesse longitudinale du véhicule cible de changement de voie, une vitesse longitudinale du véhicule précédant la cible, et une distance entre le véhicule précédant la cible et le véhicule cible de changement de voie à chaque instant au cours du processus de changement de voie ;

un module de détermination de données de déplacement transversal cible (904), configuré pour déterminer des données de déplacement transversal cible du véhicule cible de changement de voie au cours du processus de changement de voie selon des données initiales de déplacement transversal prédéfinies, des données finales de déplacement transversal prédéfinies, et une durée de changement de voie prédéfinie au cours du processus de changement de voie ;

un module de construction de première trajectoire de changement de voie (905), configuré pour construire, dans un cas où une condition de changement de voie prédéfinie est satisfaite, ou dans un cas où la condition de changement de voie prédéfinie n'est pas satisfaite et il est déterminé qu'il convient de poursuivre le changement de voie, une première trajectoire de changement de voie du véhicule cible de changement de voie dans le système de coordonnées de trajectoire de changement de voie sur la base des données de déplacement transversal cible et des données de déplacement longitudinal cible si un véhicule suivant dans une voie cible ralentit ;

un module de construction de deuxième trajectoire de changement de voie (906), configuré pour mettre à jour, dans un cas où la condition de changement de voie prédéfinie n'est pas satisfaite et il est déterminé qu'il convient de poursuivre le changement de voie, une accélération dans les données de déplacement longitudinal cible si le véhicule suivant ne ralentit pas, de sorte qu'une vitesse longitudinale mise à jour du véhicule cible de changement de voie soit supérieure à une vitesse longitudinale du véhicule suivant et inférieure à une vitesse longitudinale d'un véhicule précédant dans la voie cible ; et construire une deuxième trajectoire de changement de voie du véhicule cible de changement de voie dans le système de coordonnées de trajectoire de changement de voie sur la base des données de déplacement longitudinal mises à jour et des données de déplacement transversal cible ; et

un module de construction de première trajectoire de retour à une voie d'origine (907), configuré pour mettre à jour, dans un cas où la condition de changement de voie prédéfinie n'est pas satisfaite et il est déterminé qu'il convient de ne pas poursuivre le changement de voie, des données de déplacement transversal et des données de déplacement longitudinal lors d'un processus de retour à une voie d'origine, et construire une première trajectoire de retour à une voie d'origine du véhicule cible de changement de voie dans le système de coordonnées de trajectoire de changement de voie à partir des données de déplacement transversal et des données de déplacement longitudinal au cours du processus de retour à une voie d'origine.

10. Appareil selon la revendication 9, dans lequel le module de détermination de véhicule précédant la cible (902) est en outre configuré pour déterminer le véhicule précédant la cible à partir du véhicule précédant dans la voie cible et d'un véhicule précédant dans la voie courante en fonction du fait qu'un centroïde du véhicule cible de changement de voie franchit ou non une ligne de voie de la voie courante.

11. Appareil selon la revendication 9, dans lequel le module de construction de première trajectoire de retour à une voie d'origine (907) est en outre configuré pour déterminer des données de déplacement transversal à un instant de début de retour à une voie d'origine lorsque la condition de changement de voie prédéfinie n'est pas satisfaite ; déterminer des données de déplacement transversal à un instant de fin du retour à une voie d'origine ; déterminer les données de déplacement transversal au cours du processus de retour à une voie d'origine en fonction des données de déplacement transversal à l'instant de début, des données de déplacement transversal à l'instant de fin, et d'une première durée de retour prédéfinie ; mettre à jour, à partir du véhicule précédant dans la voie cible et du véhicule précédant dans la voie courante, un véhicule précédant la cible lors d'une période s'étendant de l'instant de début à l'instant de fin en temps réel, en fonction du fait que le centroïde du véhicule cible de changement de voie franchit ou non la ligne de voie de la voie courante au cours de la période s'étendant de l'instant de début à l'instant de fin ; et déterminer les données de déplacement longitudinal au cours du processus de retour à une voie d'origine en fonction d'une vitesse longitudinale du véhicule cible de changement de voie, d'une vitesse longitudinale du véhicule précédant la cible, et d'une distance entre le véhicule précédant la cible et le véhicule cible de changement de voie au cours de la période s'étendant de l'instant de début à l'instant de fin.

12. Appareil selon la revendication 9, dans lequel l'appareil comprend en outre : un premier module de détermination d'instant de départ, configuré pour utiliser un instant où la condition de changement de voie prédéfinie n'est pas satisfaite en tant qu'instant de départ de redressement d'une partie avant de véhicule ; un premier module de détermination de données de déplacement transversal, configuré pour déterminer des données de déplacement transversal à l'instant de départ ; un deuxième module de détermination de données de déplacement transversal, configuré pour déterminer des données de déplacement transversal à un instant d'arrêt du redressement de la partie avant de véhicule ; un premier module de mise à jour de données de déplacement transversal, configuré pour déterminer des données de déplacement transversal au cours d'un processus du redressement de la partie avant de véhicule, en fonction des données de déplacement transversal à l'instant de départ, des données de déplacement transversal à l'instant d'arrêt, et d'une durée de redressement prédéfinie ; un deuxième module de mise à jour de véhicule précédant la cible, configuré pour mettre à jour, à partir du véhicule précédant dans la voie cible et du véhicule précédant dans la voie courante, un véhicule précédant la cible lors d'une période s'étendant de l'instant de départ à l'instant d'arrêt en temps réel, en fonction du fait que le centroïde du véhicule cible de changement de voie franchit ou non la ligne de voie de la voie courante au cours de la période s'étendant de l'instant de départ à l'instant d'arrêt ; un premier module de mise à jour de données de déplacement longitudinal, configuré pour déterminer des données de déplacement longitudinal au cours du processus de redressement de la partie avant de véhicule, en fonction d'une vitesse longitudinale du véhicule cible de changement de voie, d'une vitesse longitudinale du véhicule précédant la cible, et d'une distance entre le véhicule précédant la cible et le véhicule cible de changement de voie au cours de la période s'étendant de l'instant de départ à l'instant d'arrêt ; et un module de construction de trajectoire de redressement de partie avant de véhicule, configuré pour construire une trajectoire de redressement de partie avant de véhicule du véhicule cible de changement de voie dans le système de coordonnées de trajectoire de changement de voie sur la base des données de déplacement transversal et des données de déplacement longitudinal au cours du processus du redressement de la partie avant de véhicule.

**13.** Support de stockage lisible par ordinateur, stockant un programme informatique exécutable sur un dispositif informatique, dans lequel le programme, lorsqu'il est exécuté sur le dispositif informatique, amène le dispositif informatique à réaliser le procédé de construction d'une trajectoire simulée de changement de voie de véhicule selon l'une quelconque des revendications 1 à 8.

**FIG. 1A**

Determine a target preceding vehicle according to a position of a target lane change vehicle — S101

Determine target longitudinal traveling data of the target lane change vehicle in a lane change process according to a longitudinal speed of the target lane change vehicle, a longitudinal speed of the target preceding vehicle, and a distance between the target preceding vehicle and the target lane change vehicle at each time instant in the lane change process — S102

Determine target transverse traveling data of the target lane change vehicle in the lane change process according to preset initial traverse traveling data, preset end transverse traveling data, and preset lane change time in the lane change process — S103

S104

Construct, in a case that a preset lane change condition is met, or in a case that the preset lane change condition is not met and it is determined to continue to change lanes, a first lane change trajectory of the target lane change vehicle in a lane change trajectory coordinate system based on the target transverse traveling data and the target longitudinal traveling data if a following vehicle in a target lane decelerates

S105

Update, in a case that the preset lane change condition is not met and it is determined to continue to change lanes, an acceleration in the target longitudinal traveling data if the following vehicle does not accelerate, to cause an updated longitudinal speed of the target lane change vehicle to be greater than a longitudinal speed of the following vehicle and less than a longitudinal speed of the a preceding vehicle in the target lane; and construct a second lane change trajectory of the target lane change vehicle in the lane change trajectory coordinate system based on the updated longitudinal traveling data and the target transverse traveling data

S106

Update, in a case that the preset lane change condition is not met and it is determined not to continue to change lanes, transverse traveling data and longitudinal traveling data in an original lane return process, and construct a first original lane return trajectory of the target lane change vehicle in the lane change trajectory coordinate system according to the transverse traveling data and the longitudinal traveling data in the original lane return process

**FIG. 1B**

Construct a lane change trajectory coordinate system by using a position of a target lane change vehicle as an origin, using a center line of a current lane of the target lane change vehicle as an ordinate axis, and using a normal of the center line as an abscissa axis — S201

S203 — Determine a target preceding vehicle from a preceding vehicle in a target lane and a preceding vehicle in the current lane depending on whether a centroid of the target lane change vehicle crosses a lane line of the current lane

S207 — Determine preset initial transverse traveling data, preset end transverse traveling data, and preset lane change time in the lane change process

S205 — Determine target longitudinal traveling data of the target lane change vehicle in a lane change process according to a longitudinal speed of the target lane change vehicle, a longitudinal speed of the target preceding vehicle, and a distance between the target preceding vehicle and the target lane change vehicle at each time instant in the lane change process

S209 — Determine target transverse traveling data of the target lane change vehicle in the lane change process according to the preset initial transverse traveling data, the preset end transverse traveling data, and the first preset lane change time

S211 — Construct, in a case that a preset lane change condition is met, or in a case that the preset lane change condition is not met and it is determined to continue to change lanes, a first lane change trajectory of the target lane change vehicle in the lane change trajectory coordinate system, based on the target transverse traveling data and the target longitudinal traveling data if a following vehicle target lane decelerates

S213 — Update, in a case that the preset lane change condition is not met and it is determined to continue to change lanes, an acceleration in the target longitudinal traveling data if the following vehicle does not decelerate; and construct a second lane change trajectory of the target lane change vehicle in the lane change trajectory coordinate system, based on the updated longitudinal traveling data and the target transverse traveling data

S215 — Update, in a case that the preset lane change condition is not met and it is determined not to continue to change lanes, a transverse traveling data and longitudinal traveling data in an original lane return process, and construct a first original lane return trajectory of the target lane change vehicle in the lane change trajectory coordinate system according to the transverse traveling data and the longitudinal traveling data in the original lane return process

FIG. 2

FIG. 3

FIG. 4

**FIG. 5**

**FIG. 6**

Determine transverse traveling data at a starting time instant of returning to an original lane when a preset lane change condition is not met

S2151

Determine transverse traveling data at an ending time instant of the returning to an original lane

S2153

Determine transverse traveling data in an original lane return process according to the transverse traveling data at the starting time instant, the transverse traveling data at the ending time instant, and first preset return time

S2155

Update, from a preceding vehicle in a target lane and a preceding vehicle in a current lane, a target preceding vehicle in a time period from the starting time instant to the ending time instant in real time, depending on whether a centroid of a target lane change vehicle crosses a lane line of the current lane in the time period from the starting time instant to the ending time instant

S2157

Determine a longitudinal traveling data in the original lane return process according to a longitudinal speed of the target lane change vehicle, a longitudinal speed of the target preceding vehicle, and a distance between the target preceding vehicle and the target lane change vehicle in the time period from the starting time instant to the ending time instant

S2159

FIG. 7A

Determine transverse traveling data at a starting time instant of straightening a vehicle head when a preset lane change condition is not met and it is determined to continue to change lanes — S701

Determine transverse traveling data at an ending time instant of the straightening a vehicle head — S702

Determine, according to the transverse traveling data at the starting time instant, the transverse traveling data at the ending time instant, and preset straightening time, transverse traveling data in a process of the straightening the vehicle head — S703

Update, from a preceding vehicle in a target lane and a preceding vehicle in a current lane, a target preceding vehicle in a time period from the starting time instant to the ending time instant in real time, depending on whether a centroid of a target lane change vehicle crosses a lane line of the current lane in the time period from the starting time instant to the ending time instant — S704

Determine, according to a longitudinal speed of the target lane change vehicle, a longitudinal speed of the target preceding vehicle, and a distance between the target preceding vehicle and the target lane change vehicle in the time period from the starting time instant to the ending time instant, longitudinal traveling data in the process of the straightening the vehicle head — S705

Construct a vehicle head straightening trajectory of the target lane change vehicle in a lane change trajectory coordinate system based on the transverse traveling data and the longitudinal traveling data in the process of strengthening the vehicle head — S706

**FIG. 7B**

Determine traveling time of continuing traveling longitudinally from a transverse position in transverse traveling data at an ending time instant of straightening the vehicle head — S711

Construct a traveling trajectory of a target lane change vehicle in a lane change trajectory coordinate system based on the traveling time, and the transverse traveling data and longitudinal traveling data at the ending time instant of the straightening the vehicle head — S712

**FIG. 7C**

Define a process in which a target lane change vehicle continues traveling longitudinally from a transverse position in transverse traveling data at an ending time instant of straightening the vehicle head, as a straight-line traveling process — S721

Use a time instant when a following vehicle decelerates in the straight-line traveling process as a starting time instant of continuing to change lanes — S722

Determine transverse traveling data at the starting time instant of the continuing to change lanes — S723

Determine transverse traveling data at an ending time instant of continuing to change lanes — S724

Determine, according to the transverse traveling data at the starting time instant of the continuing to change lanes, the transverse traveling data at the ending time instant of the continuing to change lanes, and preset time of the continuing to change lanes, transverse traveling data in a process of the continuing to change lanes — S725

Update, from a preceding vehicle in a target lane and a preceding vehicle in a current lane, a target preceding vehicle in a time period from the starting time instant of the continuing to change lanes to the ending time instant of the continuing to change lanes in real time, depending on whether a centroid of the target lane change vehicle crosses a lane line of the current lane in the time period from the starting time instant of continuing to change lanes to the ending time instant of the continuing to change lanes — S726

Determine longitudinal traveling data in the process of the continuing to change lanes according to a longitudinal speed of the target lane change vehicle, a longitudinal speed of the target preceding vehicle, and a distance between the target preceding vehicle and the target lane change vehicle in the time period from the starting time instant of the continuing to change lanes to the ending time instant of continuing to change lanes — S727

Construct a third lane change trajectory of the target lane change vehicle in a lane change trajectory coordinate system based on the transverse traveling data and the longitudinal traveling data in the process of continuing to change lanes — S728

**FIG. 7D**

Use, in a case that a duration of the straight-line traveling process is greater than or equal to preset traveling time and a following vehicle does not decelerate, a time instant when the preset travelling time expires as a starting time instant of returning to an original lane — S731

Determine transverse traveling data at the starting time instant of the returning to an original lane — S732

Determine transverse traveling data at an ending time instant of returning to an original lane — S733

Determine transverse traveling data in an original lane return process according to the transverse traveling data at the starting time instant of the returning to an original lane, the transverse traveling data at the ending time instant of the returning to an original lane, and second preset return time — S734

Update, from a preceding vehicle in a target lane and a preceding vehicle in a current lane, a target preceding vehicle in a time period from the starting time instant to the ending time instant of the returning to an original lane in real time, depending on whether a centroid of the target lane change vehicle crosses a lane line of the current lane in a time period from the starting time instant to the ending time instant of the returning to the original lane — S735

Determine longitudinal traveling data in the original lane return process according to a longitudinal speed of the target lane change vehicle, a longitudinal speed of the target preceding vehicle, and a distance between the target preceding vehicle and the target lane change vehicle in the time period from the starting time instant to the ending time instant of the returning to the original lane — S736

Construct a second original lane return trajectory of the target lane change vehicle in a lane change trajectory coordinate system based on the transverse traveling data and the longitudinal traveling data in the original lane return process — S737

**FIG. 7E**

A target change vehicle starts lane change — S801

Does a centroid of the target lane change vehicle cross a lane line — S803

Yes → Update a longitudinal speed with reference to a preceding vehicle in an original lane — S807

No — S805 → Update a longitudinal speed with referee to a preceding vehicle having a shorter distance from the present vehicle, among a preceding vehicle in a target lane and a preceding vehicle in an original lane

Is a preset lane change condition met — S809

Yes → Directly change lanes — S811

No → Continue to change lanes or not — S813

Does a following vehicle in the target lane decelerates — S815

Yes → Directly change lanes

No → Continue to change lanes — S817

Yes → Collision accident — S821

No → Accelerate longitudinally while ensuring not to collide with the preceding vehicle in the target lane — S819

Return to the original lane or not — S823

Yes → Return to the original lane — S835

No → Straighten a vehicle head and travel along a straight line — S825

Does the following vehicle decelerate — S827

No → Return to the original lane from a current position — S833

Yes → Continue to change lanes from a current position to the target lane — S829

The lane change ends

**FIG. 8**

Lane change trajectory coordinate system construction module 901

Target preceding vehicle determining module 902

Target longitudinal traveling data determining module 903

Target transverse traveling data determining module 904

First change trajectory construction module 905

Second lane change trajectory construction module 906

First original lane return trajectory construction module 907

FIG. 9A

Lane change trajectory coordinate
system construction module 901

Target preceding vehicle
determining module 920

Data determining module 940

Target longitudinal traveling
data determining module 930

Target transverse traveling
data determining module 950

First lane change
trajectory construction
module 960

Second lane change
trajectory construction
module 970

First original lane return
trajectory construction
module 980

First starting time
instant determining
module 981

Second target
preceding vehicle
update module 985

First transverse
traveling data
update module 984

Second transverse
traveling data
determining module 983

First transverse traveling
data determining module
982

First longitudinal
traveling data
update module
986

Vehicle head
straightening trajectory
construction module
987

Straight-line
traveling process
determining
module 988

Second starting
time instant
determining
module 989

Third transverse
traveling data
determining
module 990

Third starting time
instant determining
module 9871

Traveling time
determining
module 9881

Fourth
transverse
traveling data
determining
module 991

Fifth transverse
traveling data
determining module
9872

Traveling
trajectory
construction
module 9882

Second
transverse
traveling data
update module
992

Sixth transverse
traveling data
determining module
9873

Second target
preceding
vehicle update
module 993

Third transverse
traveling data update
module 9874

Second
longitudinal
traveling data
update module
994

Third target preceding
vehicle update module
9875

Third longitudinal
traveling data update
module 9876

Third lane
change
trajectory
construction
module 995

Second original lane
return trajectory
construction module
9878

**FIG. 9B**

FIG. 10

**EP 3 989 015 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910857583
- US 2018354519 A1
- CN 104282033 A